(19) Europäisches Patentamt
European Patent Office
Office européen des brevets

(11) **EP 2 790 050 B1**

(12) **EUROPÄISCHE PATENTSCHRIFT**

(45) Veröffentlichungstag und Bekanntmachung des Hinweises auf die Patenterteilung:
**30.05.2018 Patentblatt 2018/22**

(51) Int Cl.:
*G02B 27/09* (2006.01)

(21) Anmeldenummer: **14161455.2**

(22) Anmeldetag: **25.03.2014**

(54) **Refraktiver Strahlformer**

Refractive beam former

Dispositif de formation de faisceaux réfractifs

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2013 DE 102013206394**

(43) Veröffentlichungstag der Anmeldung:
**15.10.2014 Patentblatt 2014/42**

(73) Patentinhaber: **asphericon GmbH**
**07747 Jena (DE)**

(72) Erfinder:
• **Kiontke, Sven**
**07743 Jena (DE)**
• **Fuchs, Ulrike**
**07745 Jena (DE)**
• **Moritz, Jens**
**07743 Jena (DE)**

(74) Vertreter: **Patentanwälte Geyer, Fehners & Partner mbB**
**Sellierstrasse 1**
**07745 Jena (DE)**

(56) Entgegenhaltungen:
EP-A1- 0 681 194    DE-A1- 19 635 792
JP-A- S60 129 703    JP-A- 2012 145 687
US-A- 5 251 060

**Beschreibung**

**Gebiet der Erfindung**

Die Erfindung betrifft einen refraktiven Strahlformer. Solche Strahlformer werden in verschiedenen Gebieten der Optik eingesetzt. Eine wichtige Rolle im Zusammenhang mit dem Einsatz von Laserstrahlen kommt dabei Strahlformern, die den Durchmesser des Laserstrahls unter Beibehaltung der Kollimation aufweiten oder verengen - sogenannten Strahlaufweitern oder Strahlverengern - zu, da insbesondere die Vergrößerung des Strahldurchmessers für viele Anwendungen von großer Bedeutung ist, da auf diese Weise die freie Apertur des optischen Systems, in welches der Laserstrahl eingekoppelt werden soll, bestmöglich ausgenutzt werden kann.

**Stand der Technik**

Im Stand der Technik sind dazu, was refraktive Strahlformer betrifft, verschiedene optische Systeme bekannt. Sie verwenden üblicherweise mindestens zwei Linsen und basieren auf dem Prinzip eines Kepler- oder Galilei-Fernrohrs.

So wird beispielsweise in der EP 0 240 194 A1 ein afokaler Strahlaufweiter beschrieben, der aus einem negativen und einem positiven Linsenelement, die zueinander beabstandet sind, aufgebaut ist. Beide Linsenelemente bestehen aus verschiedenen Materialien, die so ausgewählt werden, dass temperaturbedingte Änderungen in den Brechungsindizes der beiden Elemente kompensiert werden. Für verschiedene Änderungen des Durchmessers des Strahls werden verschiedene Linsenpaare beschrieben, die Krümmungen der Linsenflächen können sphärisch oder asphärisch sein. Für verschiedene Vergrößerungen müssen also verschiedene Linsenkombinationen eingesetzt werden, dabei muss nach jedem Wechsel eine erneute Justierung erfolgen.

In der DE 691 06 569 T2 wird ein achromatischer Strahlaufweiter mit veränderlicher Vergrößerung beschrieben. Dieser besteht aus drei individuell farbkorrigierten Komponentenpaaren, wobei ein Komponentenpaar ortsfest angeordnet ist und die anderen beiden Komponentenpaare relativ zu dem ortsfesten zueinander verschoben werden können. Auf diese Weise kann eine veränderliche Vergrößerung realisiert werden, es handelt sich hierbei um einen Strahlaufweiter vom Typ eines Galilei-Fernrohrs, der einen kollimierten Laserstrahl zu einem ebenfalls kollimierten Laserstrahl mit größerem Querschnitt aufweitet.

Mit der in der DE 691 06 569 T2 beschriebenen Vorrichtung lassen sich zwar verschiedene Vergrößerungen variabel einstellen, jedoch benötigt dieses System drei Linsengruppen aus je zwei miteinander verkitteten Linsen, also insgesamt sechs Linsen. Dies macht den Aufbau zum einen kompliziert und ist aufgrund der Anzahl von mindestens sechs Linsen zum anderen kostenintensiver als die in der europäischen Offenlegungsschrift EP 0 240 194 A1 beschriebene Lösung, bei der zum Einstellen einer anderen Vergrößerung beispielsweise eine der beiden Linsen gewechselt wird. Darüber hinaus ist die in der DE 691 06 569 T2 beschriebene Lösung nicht zur Verwendung mit solchen Lasern geeignet, die über eine hohe Ausgangsleistung verfügen. Diese könnte zur Zerstörung der Linsengruppe führen, da die Verkittung der einzelnen Linsen zu einer Linsengruppe empfindlicher reagiert als das Glas der Linsen; besonders hohen Leistungen halten jedoch auch Gläser nicht mehr stand, so dass in diesem Fall auf katadioptrische Systeme ausgewichen wird.

Eine hohe Flexibilität in der Vergrößerung einerseits und eine mechanische bzw. thermische Stabilität eines Strahlformers andererseits lassen sich bei den im Stand der Technik bekannten Lösungen nicht bzw. nur mit sehr hohem technischem Aufwand gleichzeitig realisieren.

**Beschreibung der Erfindung**

Aufgabe der Erfindung ist es daher, einen refraktiven Strahlformer zu entwickeln, der mit einer möglichst geringen Anzahl von optischen Elementen auskommt. Dabei sollen sich verschiedene Vergrößerungen auf einfache Weise auch für im Umgang mit Strahlformern ungeübte Personen einstellen lassen, insbesondere soll eine Änderung der Vergrößerung oder Verkleinerung ohne eine erneute Justierung der optischen Elemente zueinander auskommen.

Ein refraktiver Strahlformer, der diese Aufgabe löst, weist die folgenden Merkmale auf: Er umfasst mehrere, entlang ihrer optischen Achsen angeordnete Meniskuslinsen, welche jeweils eine konkav gewölbte Fläche zum Eintritt bzw. Austritt eines Lichtstrahls sowie eine konvex gewölbte Fläche zum Austritt bzw. Eintritt des Lichtstrahls aufweisen. Beide Flächen jeder Meniskuslinse weisen derartige Krümmungen auf, dass ein kollimierter, parallel zu einer optischen Achse der Meniskuslinse in diese eintretender Lichtstrahl mit einem gegenüber dem eintretenden Lichtstrahl veränderten Durchmesser als kollimierter Lichtstrahl aus der Meniskuslinse austritt. Zur Vermeidung von Aberrationen weist mindestens eine der beiden Flächen eine vorgegebene asphärische Form auf. Im einfachsten Fall handelt es sich bei dem Strahlformer um ein monolithisches optisches Element, zur Realisierung einer festen Vergrößerung oder Verkleinerung reicht bereits eine einzige derartig geformte Meniskuslinse aus.

Bei den Meniskuslinsen handelt es sich dabei um sogenannte Nulllinsen, bei der die beiden optisch wirksamen Flächen konzentrisch gekrümmt sind, wobei sich der Begriff "konzentrisch" im Zusammenhang mit einer asphärischen Fläche auf eine sphärische Fläche bezieht, die der asphärischen Form als Näherung am nächsten in dem Sinne kommt, dass die Abstände der Punkte auf der asphärischen Fläche zu der sphärischen Fläche im Mittel am geringsten sind. Je nachdem wo der Strahl in die Linse eintritt, wird er in seinem Durchmesser entweder vergrößert oder verkleinert. Tritt der Lichtstrahl an der konkav gewölbten Fläche in die Meniskuslinse ein und an der konvex gewölbten Fläche wieder aus der Linse aus, so wird der Strahldurchmesser vergrößert. Tritt der Lichtstrahl hingegen an der konvex gewölbten Fläche in die Linse ein und an der konkav gewölbten Fläche wieder aus der Meniskuslinse aus, so wird der Strahldurchmesser verkleinert. Dabei muss sichergestellt sein, dass es sich bei der mindestens einen Meniskuslinse um ein afokales Element handelt, d.h. ein kollimierter Lichtstrahl, genauer gesagt ein Bündel von parallelen Lichtstrahlen, welches in die Meniskuslinse eintritt, verlässt diese wieder als kollimierter Lichtstrahl bzw. als Bündel paralleler Lichtstrahlen, jedoch mit geändertem Durchmesser.

Während im Stand der Technik zur Vermeidung von Aberrationen - damit sind insbesondere sphärische Aberration, Astigmatismus und Koma gemeint - mindestens zwei Linsen notwendig sind um wenigstens Strahldurchmesser im Bereich von bis zu 3 mm vergrößern zu können, lassen sich solche Aberrationen vermeiden, wenn mindestens eine der beiden Flächen nach vorgegebenen Bedingungen asphärisch geformt ist. Durch die asphärische Formung werden Öffnungsfehler vermieden bzw., wenn man von einer gedachten, ursprünglich sphärischen Fläche ausgeht, korrigiert. Gegenüber der Verwendung einer Meniskuslinse mit zwei sphärischen Flächen lassen sich mit dem erfindungsgemäßen refraktiven Strahlformer auch Lichtstrahlen, insbesondere Laserstrahlen mit einem Eingangsdurchmesser von mehr als 5 mm vergrößern, ohne dass Abbildungsfehler auftreten.

Die asphärische Form der jeweiligen Fläche wird durch einen vorgegebenen Satz von Parametern und eine Funktion, in die dieser Satz von Parametern eingeht, festgelegt. Dabei kann entweder eine der beiden Flächen sphärisch und die andere asphärisch geformt sein, es können aber auch beide Flächen, also sowohl die konkav gewölbte als auch die konvex gewölbte Fläche asphärisch geformt sein. Eine jede asphärisch gewölbte Fläche wird dabei zweckmäßig durch eine Asphärenfunktion $z(h)$ als Abstand zu einer lotrecht auf der optischen Achse stehenden Geraden beschrieben, wobei die Asphärenfunktion $z(h)$ auf verschiedene Weisen definiert und als Korrekturfunktion anstelle einer eine sphärisch geformte Linse beschreibenden Funktion verstanden werden kann. Die Variable $h$ bezeichnet den Abstand zur optischen Achse auf der Geraden. Anhand des vorgegebenen Satzes von Parametern und unter Berücksichtigung der Rotationssymmetrie der asphärisch geformten Fläche bzgl. der optischen Achse beschreibt die Asphärenfunktion die asphärisch gewölbte Fläche eindeutig. Der Satz vorgegebener Parameter umfasst beispielsweise folgende Größen: (i) einen minimalen, lokalen Radius r der konkav gewölbten Fläche, (ii) die Mittendicke der Meniskuslinse auf der optischen Achse, d.h. die Dicke der Linse entlang dieser Achse; (iii) ein Material, beispielsweise Glas oder Kunststoff, aus welchem die Meniskuslinse gefertigt ist; (iv) das Aspektverhältnis, d.h. das Verhältnis von der Mittendicke zum Durchmesser der Meniskuslinse, alternativ auch den Durchmesser der Meniskuslinse. Als weitere Bedingung geht außerdem ein, dass das Licht vor dem Eintritt in die Linse und nach dem Austritt aus der Linse jeweils als kollimierter Strahl verläuft.

Ist die konkave Fläche sphärisch gewölbt, so ist der lokale Radius $r$ an jeder Stelle auf der Fläche gleich. Ist die konkave Fläche asphärisch gewölbt, so ist der Radius $r$ keine konstante Größe mehr, sondern variiert über den gesamten Abstand von der optischen Achse, wobei sich der lokale Wert an einer bestimmten Position aus der Krümmung in der nächsten Umgebung dieser Position ergibt. Die untere Grenze, der minimale Radius, ist im Prinzip frei wählbar, wird jedoch in der Regel anhand fertigungstechnischer Kriterien festgelegt. Die lokalen Radien im Falle einer asphärischen Fläche sind nicht zwingend konzentrisch, beziehen sich also nicht notwendig auf einen gemeinsamen Mittelpunkt.

Auch in dem Fall, dass die konkave Fläche asphärisch geformt ist, reicht die Angabe des minimalen, lokalen Radius dieser Fläche aus um den Radius einer sphärischen konvexen Fläche zu bestimmen, da dieser anhand der Vorgabe der Mittendicke unter Berücksichtigung der konzentrischen Anordnung der Flächen dann in Bezug auf diesen minimalen Radius eindeutig festgelegt ist.

Im Fall von zwei asphärischen Flächen reicht diese Angabe zur Festlegung der Flächen aufgrund der hinzugekommenen Freiheitsgerade nicht mehr aus, hier wird dann als weitere Bedingung eine Intensitätsverteilung des austretenden Lichtstrahls als Profil oder Parameterfeld für die Bestimmung der Flächen vorgegeben, ob z.B. der austretende Strahl im Querschnitt ein nahezu homogenes oder ein einer Gaußverteilung folgendes Intensitätsprofil aufweisen soll. Das nahezu homogene Intensitätsprofil des Lichtstrahls wird dabei durch ein Intensitätsprofil angenähert, welches einer Gaußverteilung höherer Ordnung folgt, einer so genannten Super-Gaußverteilung. Aufgrund seiner Form wird dieses Intensitätsprofil auch als *top-hat*-Profil bezeichnet. Auch alle anderen Profilformen zwischen einer normalen Gaußverteilung und einem *top-hat*-Profil, d.h. Gaußverteilungen niedrigerer Ordnungen, als das *top-hat*-Profil lassen sich als Intensitätsverteilung vorgeben, falls es erforderlich sein sollte.

Aufgrund der Komplexität der Asphärenfunktion wird diese bzw. werden die Koeffizienten, die die Funktion beschreiben, iterativ bestimmt. Die Vorgabe des Satzes von Parametern sorgt dafür, dass die jeweils durch die Funktion $z(h)$ festgelegte Fläche eindeutig bestimmt wird, wobei je nach Wahl der Funktion ggf. auch die diese bestimmenden Koeffizienten eindeutig bestimmt werden können.

In einer besonders bevorzugten Ausgestaltung ist die konkav gewölbte Fläche sphärisch geformt und weist die konvex gewölbte Fläche eine vorgegebene asphärische Form auf; dies hat fertigungstechnische Vorteile aufgrund der einfacheren Zugänglichkeit der konvexen Fläche durch Maschinen bei der Herstellung der Flächen der Meniskuslinse. Die konvex gewölbte, asphärisch geformte Fläche ist dabei durch die Beziehung

$$z(h) = \frac{h^2}{R\left(1+\sqrt{1-(1+K)\frac{h^2}{R^2}}\right)} + \sum_{i=2}^{N} A_{2i} h^{2i} \qquad (1)$$

beschreibbar, wobei $K$ die sogenannte konische Konstante ist, $i$ und $N$ natürliche Zahlen und $A_{2i}$ die Koeffizienten eines Polynoms in $h$ sind. $R$ bezeichnet den Radius einer gedachten Kegelschnittfläche am Scheitelpunkt dieser Fläche, d.h. den Abstand des Scheitelpunkts zum nächstgelegenen Brennpunkt. Dabei liegen sowohl der Scheitelpunkt als auch die Brennpunkte der Kegelschnittfläche auf der optischen Achse. Die Tangente der Kegelschnittfläche im Scheitelpunkt fällt dann mit der oben genannten Geraden zusammen. Die Koeffizienten, die konische Konstante $K$ und der Radius $R$ werden iterativ bestimmt.

Die mit Formel (1) beschriebene Asphärenfunktion $z(h)$ ist nur ein Beispiel dafür, wie sich die Form der asphärisch geformten Fläche vorgeben lässt. Eine andere Möglichkeit zur Vorgabe der asphärischen Form besteht in der Verwendung der folgenden Beziehung:

$$z(h) = \frac{h^2}{R\left(1+\sqrt{1-\frac{h^2}{R^2}}\right)} + \left(\frac{h}{h_0}\right)^2 \frac{\left(1-\left(\frac{h}{h_0}\right)^2\right)}{\sqrt{1-\frac{h^2}{R^2}}} \sum_{i=0}^{N} A_i \cdot Q_i \left(\frac{h}{h_0}\right)^2 \qquad (2).$$

Dabei ist $h_0$ ein Normradius für die Variable h. Die Koeffizienten $A_i$ und $Q_i$ des Polynoms sind ebenso wie die Gleichungen (1) und (2) und die übrigen in diesen Gleichungen verwendeten Größen ausführlich in der internationalen Norm ISO 10110-12 beschrieben, auf die an dieser Stelle zur Erläuterung ausdrücklich verwiesen wird.

Die Asphärenfunktionen beschreiben dabei die Flächen der Linsen zunächst nur im Querschnitt, also im Zweidimensionalen. Da jedoch eine Meniskuslinse rotationssymmetrisch um ihre optische Achse ist, erhält man die übrigen Punkte auf den gewölbten Flächen durch einfache Rotation um die optische Achse. In diesem Sinne kann die Kegelschnittfläche dann als Sphäre, Rotationsellipsoid, -paraboloid oder -hyperboloid betrachtet werden, die Gerade bzw. Tangente liegt dann in der entsprechenden Tangentialfläche.

In einer bevorzugten Ausführung, die eine kompakte Bauweise sowie eine einfache Handhabung ermöglicht, liegt das Aspektverhältnis zwischen 0,5 und 2, besonders bevorzugt bei 1, in diesem Fall sind Mittendicke und Durchmesser der Meniskuslinse dann identisch. Ergänzend oder alternativ liegt der Radius r, wenn die konkave Fläche sphärisch geformt ist, bzw. der lokale Radius bei einer asphärisch geformten Fläche, in einem Bereich zwischen 10 mm und etwa dem Zweifachen des Durchmessers der mindestens einen Meniskuslinse, der untere Wert entspricht auch etwa dem minimalen lokalen Radius.

Als Material für die Meniskuslinsen kommen Gläser, Kunststoffe oder Halbleiter infrage, wobei die konkrete Auswahl von den Wellenlängen bzw. Wellenlängenbereichen, in denen der Strahlformer eingesetzt werden soll, beeinflusst wird. So ist beispielsweise für Laser, die Licht im infraroten Bereich aussenden, ein refraktiver Strahlformer von Vorteil, bei dem die Meniskuslinsen aus Silizium oder Germanium gefertigt sind. Für Gläser im sichtbaren Bereich kommen beispielsweise Schwerflintglas (S-TIH6) mit einem Brechungsindex von $n_d = 1{,}773$ oder Borosilikat-Kronglas (N-BK7) mit einem Brechungsindex von $n_d = 1{,}507$, jeweils bei einer Wellenlänge von $\lambda_d = 546$ nm in Frage, da es sich hierbei um Gläser handelt, die vergleichsweise preiswert sind. Für Anwendungen im ultravioletten Wellenlängenbereich und für hohe Laserleistungen ist besonders Quarzglas als Material für die Meniskuslinsen geeignet. Werden mehrere Meniskuslinsen im Strahlformer miteinander kombiniert, können diese selbstverständlich aus verschiedenen Materialien bestehen.

Gegenüber einem den Durchmesser des Strahls verändernden Strahlformer aus dem Stand der Technik kann mit dem erfindungsgemäßen refraktiven Strahlformer die Veränderung des Strahldurchmessers bereits mit einem einzigen optischen Element, der mindestens einen Meniskuslinse erreicht werden. Gegenüber einem herkömmlichen optischen System zur Veränderung des Strahldurchmessers besteht ein wesentlicher Vorteil auch darin, dass eine Meniskuslinse kompakter ist, sowohl was die Längsausdehnung entlang der optischen Achse als auch was den Durchmesser betrifft. Die Handhabung wird auf diese Weise erleichtert, typische Durchmesser liegen beispielsweise im Bereich zwischen zwei und fünf Zentimetern.

Mit einer einzelnen Meniskuslinse lässt sich bereits eine einzige, feste Vergrößerung bzw. Verkleinerung des Strahldurchmessers erzielen. Bei einem Strahlformer zur Vergrößerung des Strahldurchmessers, bei dem die konkav gewölbte Fläche sphärisch geformt ist, beträgt die Vergrößerung $V$ in Abhängigkeit vom Brechungsindex $n$ des Glases, dem Radius $r$ der konkav gewölbten Fläche und der Mittendicke $M$ der Meniskuslinse:

$$V = 1 + \frac{M}{r} \cdot \frac{n-1}{n} \qquad (3).$$

Im sichtbaren Bereich sind bei der Verwendung der genannten Gläser mit einer einzelnen Meniskuslinse Vergrößerungen von etwa bis zu einem Faktor von 2,5 möglich, im Infraroten bis zu einem Faktor von 3,5.

Um eine höhere Flexibilität in der Wahl der Vergrößerung zu erhalten, sind mehrere Meniskuslinsen entlang ihrer optischen Achsen hintereinander angeordnet. Beispielsweise kann durch die sequenzielle Anordnung zweier gleichartiger Meniskuslinsen, die jeweils eine Vergrößerung von 1,5 aufweisen, eine gesamte Vergrößerung von 2,25 erzielt werden.

Auch mehr als zwei Linsen mit verschiedenen Vergrößerungen oder Verkleinerungen können hintereinander entlang ihrer optischen Achse - im einfachsten Fall auf einer optischen Bank - angeordnet werden, mit vier Linsen lassen sich beispielsweise Vergrößerungen bis zu einem Faktor 16 und mit fünf Linsen Vergrößerungen bis zu einem Faktor 32 realisieren. Einzige Beschränkung bildet dabei der Durchmesser der Linsen. Jede der Meniskuslinsen kann außerdem in Abhängigkeit von der Ausrichtung auf der optischen Achse entweder als vergrößerndes oder als verkleinerndes Element eingesetzt werden, wodurch insbesondere eine hohe Flexibilität in der Wahl der Strahlaufweitung entsteht, da auf diese Weise auch Zwischenvergrößerungen, die zwischen den eigentlichen Vergrößerungen der einzelnen Meniskuslinsen - einzeln oder in Reihe - liegen, eingestellt werden können. Bereits mit fünf Meniskuslinsen lassen sich so 62 verschiedene Vergrößerungen einstellen.

Die Anordnung auf einer optischen Bank ist zwar möglich, jedoch erfordert sie, um die Qualität des kollimierten Strahls zu bewahren, eine genaue Ausrichtung der Meniskuslinsen von Hand zueinander, was zum einen ihre Verkippung gegen die optische Achse und zum anderen auch eine Zentrierung auf der optischen Achse betrifft. Dies mag für einen Aufbau, bei dem die Vergrößerungen oder Verkleinerungen selten oder gar nicht geändert werden müssen, durchaus akzeptabel sein, im Alltag beim industriellen Einsatz, wenn beispielsweise die Vergrößerung schnell gewechselt werden soll, erweist sich diese Vorgehensweise jedoch nicht als praktikabel.

In einer bevorzugten Ausgestaltung umfasst der refraktive Strahlformer daher auch Ausrichtungsmittel zur verkippungsfreien und zentrierten Ausrichtung mehrerer Meniskuslinsen zueinander auf einer optischen Achse, wobei diese Ausrichtung selbstverständlich nur im Rahmen vorgegebener Toleranzen verkippungsfrei und zentriert ist.

Der Winkelbereich, der noch als verkippungsfrei eingestuft werden kann, erlaubt Toleranzen in einem Bereich von $\pm 1{,}0°$ zur gemeinsamen optischen Achse, wenn man ein Gesamtsystem aus mehreren, hintereinander angeordneten Meniskuslinsen betrachtet. Um möglichst viele Linsen hintereinander anordnen zu können, sollte daher die Verkippung einer einzelnen Linse ebenfalls möglichst gering sein, für eine einzelne Linse betragen die Abweichungen der Lage der optischen Achse der Linse zur Lage der optischen Achse des Gesamtsystems bzw. des kollimierten Strahls daher bevorzugt nur $\pm 0{,}07°$. Sollen nur zwei Linsen hintereinander angeordnet werden, so kann hier die maximale Toleranz von $\pm 1{,}0°$ ausgeschöpft werden.

Der Bereich, der noch als zentriert eingestuft werden kann, erlaubt Toleranzen im Bereich von $\pm 1$ mm Verschiebung senkrecht zur optischen Achse, wieder auf ein Gesamtsystem von mehreren hintereinander angeordneten Meniskuslinsen bezogen. Zwischen zwei Meniskuslinsen liegt die Toleranz bevorzugt bei $\pm 0{,}140$ mm um möglichst viele Meniskuslinsen miteinander in einem Strahlformer bzw. einem strahlformenden System kombinieren zu können.

In einer besonders bevorzugten Ausgestaltung umfassen diese Mittel zur Ausrichtung ein tubusförmiges Fassungselement mit zwei Öffnungen, in welches die mindestens eine Meniskuslinse eingesetzt ist. An beiden Öffnungen des Fassungselements sind Mittel zur Verbindung mit jeweils einem entsprechenden weiteren Fassungselement mit mindestens einer weiteren Meniskuslinse ausgebildet. Dabei kann in jedes Fassungselement eine Linse eingesetzt sein, es können aber auch mehrere Linsen in ein Fassungselement aufgenommen werden. Enthält jedes Fassungselement nur eine Linse, so lassen sich die Fassungselemente ebenfalls sehr kompakt gestalten und bieten das höchstmögliche Maß an Flexibilität hinsichtlich einer Kombination verschiedener Meniskuslinsen und damit verschiedener Vergrößerungen oder Verkleinerungen.

Die Fassungselemente können aus verschiedenen Materialien gefertigt sein, die in Abhängigkeit beispielsweise von den Anforderungen, die an die Fassungselemente gestellt werden, ausgewählt werden können. Wenn bei Zimmertemperatur gearbeitet wird bzw. Temperaturschwankungen keine Rolle spielen, können beispielsweise Kunststoffe wie Polyetheretherketon (PEEK) und Polyoxymethylen (POM), Magnesium wie AZ91-D, Aluminiumlegierungen wie 6061T6, Messing wie ONSC46400, Edelstahl wie 1.4305, oder Titanlegierungen wie $Ti_6Al_4V$ verwendet werden, wobei die metallischen Materialien vorzugsweise auch eloxiert sind. Insbesondere die letztgenannte Titanlegierung eignet sich aufgrund ihrer thermischen Eigenschaften gut zur Verwendung mit den oben bereits genannten Gläsern, da diese Legierung und die Gläser ähnliche Wärmeausdehnungskoeffizienten aufweisen. Auch Kunststoff ist ein mögliches Material für die Fassungselemente. Ist der refraktive Strahlformer hohen Temperaturschwankungen unterworfen, so sollten das Material für die Linsen und das Material für die Fassungselemente so gewählt werden, dass mechanische Spannungen aufgrund der thermischen Ausdehnung der beiden Komponenten, die zu einer Verschlechterung der Abbildungsqualität führen könnten, vermieden werden.

Dabei muss darauf geachtet werden, dass die Meniskuslinse - jeweils im Rahmen der zulässigen Toleranzen - mit minimaler Verkippung und mit minimaler Dezentrierung in dem Fassungselement gehalten wird. Das Einsetzen in das Fassungselement sollte daher werksseitig mit einer dauerhaften Verbindung vorgenommen werden und nicht dem Anwender überlassen werden, obwohl auch solche Lösungen denkbar sind, wenn beispielsweise die Meniskuslinse ausgewechselt werden soll. In diesem Fall kann eine rein formschlüssige und / oder kraftschlüssige Verbindung der Meniskuslinse mit dem Fassungselement von Vorteil sein. Oft jedoch wird es einfacher sein, das Fassungselement mitsamt der Meniskuslinse auszuwechseln, falls dies aufgrund von Beschädigungen an der Linse oder am Fassungselement notwendig werden sollte. Eine dauerhafte Verbindung der Meniskuslinse mit dem Fassungselement ist daher letztendlich von Vorteil. In einer bevorzugten Ausgestaltung ist die Meniskuslinse daher mit dem Fassungselement verkittet. Beispielsweise kann dazu ein unter UV-Licht aushärtendes Adhäsionsmittel verwendet werden, so dass weder die Linse noch das Fassungselement dabei thermisch belastet werden. Auch eine Verlötung der beiden Teile oder jede andere stoffschlüssige Verbindung, die die Meniskuslinse dauerhaft und gegebenenfalls thermisch stabil in dem Fassungselement fixiert, sind probate Mittel.

Um zu verhindern, dass die Meniskuslinse beim Einsetzen einerseits durchrutscht oder andererseits verkippt, ist in dem Fassungselement mindestens ein ringförmiger Anschlag ausgebildet, der genau dies verhindert. Auch mehrere Linsen hintereinander können so in einem Fassungselement angeordnet werden, wenn die später eingesetzten Linsen einen größeren Durchmesser als die zuerst eingesetzten Meniskuslinsen haben. Der ringförmige Anschlag kann als separates Einsatzteil für das Fassungselement ausgebildet sein, er kann aber auch an dieser ausgebildet sein, so dass Anschlag und Fassungselement einstückig gefertigt sind. Zur Verhinderung des Verkippens kann der Anschlag beispielsweise eine Planfläche aufweisen, auf der im eingesetzten Zustand eine an der Meniskuslinse ausgebildete Planfläche aufliegt. Letztere kann beispielsweise an der Seite der Meniskuslinse ausgebildet sein, welche die konkav gewölbte Fläche enthält, da hier in der Regel ausreichend Platz zur Verfügung steht. Der Anschlag muss außerdem nicht durchgehend ringförmig ausgebildet sein, auch ein durchbrochener Ring mit mehreren Planflächen ist denkbar, beispielsweise drei am inneren Umfang angeordneten Flächen nach Art einer Dreipunktauflage.

Um die Meniskuslinse in dem Fassungselement zu führen und für Ihre Zentrierung zu sorgen, ist bevorzugt mindestens ein Teilbereich am inneren Umfang des Fassungselements als passgenaue Führung für die mindestens eine Meniskuslinse ausgestaltet. Diese Führung verhindert zusätzlich zu dem Anschlag ein Verkippen. Auf den mindestens einen Teilbereich wird entsprechend kein Adhäsionsmittel aufgetragen. Um trotz der Passgenauigkeit ein Einsetzen der Meniskuslinse in das Fassungselement mittels Durchrutschen bis zum Anschlag zu ermöglichen und ein Einklemmen aufgrund zu hoher Haftreibung zu verhindern, ist der zylinderförmige Rand der Meniskuslinse geglättet, beispielsweise geschliffen; auch die für die Führung vorgesehenen Flächen können geglättet werden. Die einstückige Fertigung des Teilbereichs am inneren Umfang des Fassungselements ist fertigungstechnisch besonders bei preiswerteren Materialien wie Kunststoff, aber auch bei Messing oder anderen metallischen Materialien vorteilhaft, alternativ kann als Führung aber auch ein gesondertes Passstück verwendet werden, was beispielsweise in das Fassungselement eingeschraubt, eingespannt oder eingeklebt wird. Im ersten Fall ist die ringförmige, passgenaue Führung auswechselbar, so dass in ein Fassungselement auch Meniskuslinsen verschiedenen Durchmessers eingesetzt werden können, ein Fassungselement also nicht exakt auf die einzusetzende Linse bzw. deren Durchmesser angepasst sein muss.

Die - im Rahmen der vorgegebenen Toleranzen - passgenaue Führung am inneren Umfang muss dabei nicht ringförmig ausgestaltet sein, beispielsweise ist auch eine Dreipunktführung möglich, bei der die Meniskuslinse in drei verschiedenen Teilbereichen, die in einem Winkel von beispielsweise jeweils 120° zueinander am Umfang angeordnet sind, anliegt.

Die Mittel zur Verbindung zweier Fassungselemente können auf verschiedene Weise realisiert werden, wobei jeweils darauf geachtet werden muss, dass nach Herstellung der Verbindung zweier Fassungselemente die darin befindlichen Meniskuslinsen aneinander ausgerichtet sind, dass also die optischen Achsen der einzelnen Meniskuslinsen alle auf einer gemeinsamen Achse liegen.

Eine einfache Möglichkeit die Mittel zur Verbindung zu realisieren besteht darin, eine der beiden Öffnungen jedes Fassungselements steckerförmig und die andere der beiden Öffnungen des Fassungselements buchsenförmig auszubilden, so dass das Fassungselement an jeder Öffnung über eine Steckverbindung mit einem entsprechenden weiteren Fassungselement verbindbar ist. Im einfachsten Fall klemmt der Stecker in der Buchse, es wird also eine kraftschlüssige Verbindung hergestellt. Die Steckverbindung kann auch als Bajonettverschluss ausgestaltet sein oder um einen solchen Bajonettverschluss ergänzt werden, bei dem zwei Fassungselemente mittels einer Steck-Dreh-Bewegung ineinander gesetzt werden. Zur Sicherung kann der Bajonettverschluss eine Raste umfassen.

In einer alternativen Ausgestaltung kann das Fassungselement auch mit zwei gleichartig geformten Öffnungen ausgestaltet sein, wobei an den beiden Öffnungen gleichartige Verbindungsmittel, beispielsweise mit vom Umfang nach innen abgesetzten Vorsprüngen, ausgebildet sind. Zwei Fassungselemente werden dann ebenfalls mit einer Steck-Dreh-Bewegung miteinander verbunden, so dass die am Rand der Öffnung ausgebildeten Vorsprünge des einen Fassungselements hinter entsprechende Vorsprünge an dem anderen Fassungselement greifen. Auch diese Ausgestaltung kann um eine Rastverbindung zur Sicherung ergänzt werden.

Eine hohe Stabilität eines strahlformenden Systems aus mindestens zwei miteinander verbundenen Fassungselementen lässt sich auch mit einer formschlüssigen Verbindung erreichen, wenn an der einen Öffnung des Fassungselements beispielsweise ein Innengewinde und an der anderen Öffnung ein Außengewinde ausgebildet ist. Auf diese Weise ist das Fassungselement an jeder Öffnung über eine Schraubverbindung mit einem entsprechenden weiteren Fassungselement verbindbar. Eine Schraubverbindung ist dann zu bevorzugen, wenn es auf eine einfache Handhabung ankommt.

Um zwei Fassungselemente aneinander auszurichten und ein Verkippen oder Verkanten zweier Fassungselemente und damit eine Dejustierung der Meniskuslinsen gegeneinander zu verhindern, weisen die Fassungselemente bevorzugt Anlageflächen auf, welche zur Erzielung einer besonders hohen Stabilität bevorzugt umlaufend ringförmig oder konisch ausgebildet sind, eine konische Ausgestaltung erleichtert das Herstellen der Verbindung. An ihren Kanten können die Anlageflächen auch mit einer Fase versehen sein, was ebenfalls das Herstellen der Verbindung beim Ineinandersetzen erleichtert.

Anlageflächen sind insbesondere bei einer Schraubverbindung von Vorteil, da bei dieser dann das Spiel großzügiger ausgelegt werden kann, was das Herstellen der Verbindungen leichtgängiger macht. Bei einer Steckverbindung können die Anschlagflächen denjenigen Flächen entsprechen, die nach Art von Stecker und Buchse aneinander liegen.

Im Falle einer Öffnung mit Stecker oder Außengewinde ist die Anlagefläche ebenfalls am äußeren Umfang bzw. der Außenseite des Fassungselements in diesem Bereich, im Falle einer Öffnung mit Buchse oder Innengewinde ist die Anlagefläche am inneren Umfang bzw. an der Innenseite des Fassungselements in diesem Bereich ausgebildet. Die Anlageflächen sind zweckmäßig geglättet, bei metallischen Fassungselementen beispielsweise geschliffen.

Eine Justierung der einzelnen Meniskuslinsen zueinander durch einen Anwender entfällt bei beiden Arten der Verbindung, durch den Aufbau des refraktiven Strahlformers aus mehreren, miteinander verbindbaren Segmenten - den Fassungselementen mit darin eingesetzten Meniskuslinsen - lässt sich eine Vielzahl von verschiedenen Vergrößerungen oder Verkleinerungen realisieren, ohne dass eine besondere Justierung erfolgen müsste, da die einzelnen Meniskuslinsen in ihren Fassungselementen bereits im Rahmen der jeweiligen Toleranzen verkippungsfrei und zentriert ausgerichtet sind, so dass eine Kombination der einzelnen Segmente auch durch ungeschultes Personal möglich ist. Insgesamt wird die Handhabung des refraktiven Strahlformers für die Einstellung verschiedener Vergrößerungen damit wesentlich erleichtert.

Im Rahmen der Erfindung liegt es dabei auch, die Fassungselemente nicht nur über entsprechende Gewinde oder Steckverbindungen direkt miteinander zu verbinden, sondern auch über Zwischenringe. In einer bevorzugten Ausgestaltung umfasst der refraktive Strahlformer daher mindestens einen Zwischenring zur Verbindung zweier Fassungselemente an zwei gleichartig ausgebildeten Öffnungen. Dies kann z.B. dann sinnvoll sein, wenn der Lichtstrahl erst vergrößert und anschließend wieder verkleinert werden soll um beispielsweise Zwischenstufen bei der Strahlaufweitung eines Laserstrahls zu realisieren. Es ist auch denkbar, die beiden Öffnungen eines Fassungselements gleichartig auszugestalten, also beispielsweise beide Öffnungen mit einem Innengewinde oder mit einem Außengewinde zu versehen. In diesem Fall umfassen die Mittel zur Verbindung grundsätzlich einen Zwischenring, über den zwei Fassungselemente miteinander verbindbar sind. Falls an dem Fassungselement zwei Innengewinde vorgesehen sind, ist der Zwischenring im Innern mit einem Außengewinde angeordnet; für den Fall, dass an den beiden Öffnungen des Fassungselements jeweils ein Außengewinde ausgebildet ist, werden die beiden Fassungselemente über einen Zwischenring mit einem Innengewinde verbunden. Dabei lassen sich über die Zwischenringe nicht nur Schraubverbindungen zwischen gleichartig gestalteten Öffnungen herstellen, auch Steckverbindungen mit oder ohne Bajonettverschluss lassen sich auf diese Weise realisieren.

Der refraktive Strahlformer wird bevorzugt um optische Elemente ergänzt, die eine größere Flexibilität beim Einsatz erlauben, diese optischen Elemente sind bevorzugt ebenfalls in eigenen Fassungselementen angeordnet, so dass sie mit den Fassungselementen, die Meniskuslinsen aufweisen, beliebig kombinieren lassen.

So umfasst der refraktive Strahlformer in einer bevorzugten Ausgestaltung ein wellenlängenadaptives Korrekturelement zur Korrektur von Aberrationen bei Ist-Wellenlängen, die in einem vorgegebenen Bereich um eine Soll-Wellenlänge liegen, wobei der Strahlformer für einen Betrieb bei der Soll-Wellenlänge ausgelegt ist, und wobei das wellenlängenadaptive Korrekturelement einen divergenten oder konvergenten Lichtstrahl bei der Ist-Wellenlänge in einen kollimierten Lichtstrahl überführend ausgebildet ist.

Während ein Strahlformer nach Auswahl der Materialien für die Linsen und der einzelnen optischen Elemente so ausgelegt ist, dass er einen kollimierten Strahl bei einer Soll-Wellenlänge, die beispielsweise der Ausgangswellenlänge eines Lasers entspricht, dem der Strahlformer nachgeschaltet ist, wieder in einen kollimierten Strahl überführt, so kommt es zu Abweichungen in der Abbildung, wenn das Licht eine von der Soll-Wellenlänge abweichende Ist-Wellenlänge aufweist. Der ausgehende Lichtstrahl ist dann nicht mehr konvergent, sondern je nachdem, ob die Ist-Wellenlänge größer oder kleiner als die Soll-Wellenlänge ist, divergent bzw. konvergent. Mit dem wellenlängenadaptiven Korrekturelement lässt sich ein divergenter bzw. konvergenter Strahl bei der Ist-Wellenlänge wieder in einen kollimierten Strahl überführen.

Bevorzugt umfasst das wellenlängenadaptive Korrekturelement drei Korrekturlinsen oder Korrekturlinsengruppen in Form von Kittgliedern, wobei es vorteilhaft ist, mit so wenig Linsen wie möglich auszukommen. Besonders bevorzugt umfasst das wellenlängenadaptive Korrekturelement eine erst äußere, eine mittlere und eine zweite äußere Korrekturlinse, wobei mindestens eine der Korrekturlinsen - bevorzugt eine der äußeren - mindestens eine asphärische Oberfläche aufweist. Mittels der asphärischen Oberfläche(n) lassen sich weitere Aberrationen, die durch die von der Soll-Wellenlänge abweichende Ist-Wellenlänge verursacht werden, korrigieren.

Um eine Adaption an verschiedene Wellenlängen aus einem Wellenlängenbereich um die Soll-Wellenlänge zu ermöglichen, ist mindestens eine der Korrekturlinsen gegen die beiden anderen entlang der optischen Achse verschiebbar angeordnet. Falls nur eine der äußeren Linsen eine asphärische Oberfläche aufweist, so ist diese bevorzugt fest angeordnet, d.h. beispielsweise im Fassungselement fest eingebaut, wohingegen die andere äußere Korrekturlinse dann gegen diese und die mittlere, ebenfalls fest angeordnete Korrekturlinse verschiebbar ist. Diese Verschiebung kann beispielsweise mittels entsprechender, drehbarer Ringe oder Stifte am Fassungselement erfolgen, wie sie für fotografische Objektive bekannt sind. Je größer die möglichen Stellwege im wellenlängenadaptiven Korrekturelement sind, desto größer ist der Wellenlängenbereich, in welchem Korrekturen für von der Soll-Wellenlänge abweichende Ist-Wellenlängen möglich sind. Die einzelnen Korrekturlinsen können aus identischen Materialien aufgebaut sein, dies ist jedoch nicht zwingend.

Ein weiteres optisches Element, welches die Flexibilität des refraktiven Strahlformers erhöht, ist ein Zoomelement zur Einstellung einer stufenlosen Zwischenvergrößerung bzw. -verkleinerung, welches optional ebenfalls Teil des Strahlformers ist. Auch das Zoomelement ist bevorzugt in einem eigenen Fassungselement angeordnet, was einerseits die Verbindung mit anderen Fassungselementen, andererseits auch die Einstellung des Zoomelements erleichtert. Während sich mit der Hintereinanderreihung einzelner Meniskuslinsen nur Vergrößerungen bzw. Verkleinerungen des Strahldurchmessers in diskreten Schritten erreichen lassen, können mit Hilfe des Zoomelements stufenlos Zwischenvergrößerungen eingestellt werden, die den Bereich zwischen zwei diskreten Stufen abdecken, wobei bei Erreichen der Maximalvergrößerung des Zoomelements dieses beispielsweise aus dem Strahlengang entfernt und durch eine entsprechende Meniskuslinse ersetzt werden kann.

Bevorzugt umfasst das Zoomelement eine erste äußere, eine mittlere und eine zweite äußere Zoomlinsengruppe, wobei bevorzugt eine der äußeren und die mittlere Zoomlinsengruppe gegenüber der anderen äußeren Zoomlinsengruppe entlang der optischen Achse verschiebbar ist. Bevorzugt weist die nicht verschiebbare Zoomlinsengruppe dabei eine asphärische Oberfläche zur Korrektur von durch die Einbringung des Zoomelements verursachten Aberrationen auf.

Das Zoomelement kann im wesentlichen spiegelsymmetrisch aufgebaut sein und beispielsweise als erste und zweite äußere Zoomlinsengruppe ein Bikonvex-Element aus demselben Material und als mittlere Zoomlinsengruppe ein Bikonkav-Element aus einem anderen Material umfassen, wenn einzelne Linsen verwendet werden. Durch die asphärische Oberfläche auf der äußeren Seite der feststehenden äußeren Zoomlinsengruppe wird diese Symmetrie jedoch gebrochen. Alle Zoomlinsengruppen können auch aus identischem Material aufgebaut sein. Verwendet man jedoch verschiedene Materialien, so kann das Zoomelement achromatisch korrigiert werden, was den Einsatz bei verschiedenen Wellenlängen ermöglicht.

Die Verschiebung der einen äußeren Zoomlinsengruppe und der mittleren Zoomlinsengruppe erfolgt dabei gemeinsam, d.h. gekoppelt, jedoch sind die Stellwege unterschiedlich, die Kopplung ist nichtlinear. Die Verstellung kann mittels entsprechender Ringe oder Stifte am äußeren Umfang beispielsweise des Fassungselements, in dem das Zoomelement zur erleichterten Verbindung mit den Meniskuslinsen des Strahlformers angeordnet ist, erfolgen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

## Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen:

Fig.1        eine Grundform eines refraktiven Strahlformers mit Strahlverlauf,

Fig.2        eine Erläuterung der wichtigsten Größen zur Asphärenberechnung,

Fig.3        eine erste Ausgestaltung eines refraktiven Strahlformers mit einer Meniskuslinse,

Fig.4        eine weitere Ausgestaltung eines refraktiven Strahlformers mit einer Meniskuslinse,

Fig.5        eine dritte Ausgestaltung eines refraktiven Strahlformers mit einer Meniskuslinse,

Fig.6a, b    einen Strahlformer mit mehreren Meniskuslinsen in zwei Ausführungen,

Fig.7        einen Strahlformer, bei dem die Meniskuslinse in ein Fassungselement eingesetzt ist,

Fig.8        einen Strahlformer, bei dem mehrere Fassungselemente mit Meniskuslinsen miteinander verbunden sind,

Fig.9        einen ersten Zwischenring zur Verbindung zweier Fassungselemente,

Fig.10       einen zweiten Zwischenring zur Verbindung zweier Fassungselemente,

Fig.11       vier Fassungselemente mit Meniskuslinsen, die zum Teil über Zwischenringe miteinander verbunden sind,

Fig.12       ein Fassungselement, bei dem beide Öffnungen gleichartig ausgebildet sind und

Fig.13       eine Verbindung zweier solcher Fassungselemente, wie sie in Fig. 12 dargestellt sind.

## Ausführliche Beschreibung der Zeichnungen

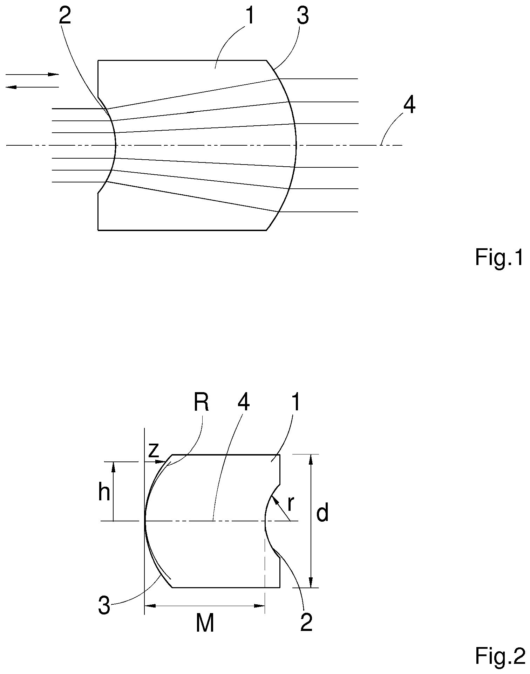

In Fig.1 ist zunächst die Grundform eines refraktiven Strahlformers und der Strahlverlauf durch diesen Strahlformer dargestellt. Der Strahlformer umfasst mindestens eine, im gezeigten Beispiel genau eine Meniskuslinse 1. Diese weist eine konkav gewölbte Fläche 2 und eine konvex gewölbte Fläche 3 auf. Ein Lichtstrahl kann entweder durch die konkav gewölbte Fläche 2 in die Meniskuslinse 1 eintreten und tritt dann an der konvex gewölbten Fläche 3 aus der Meniskuslinse 1 aus, oder er tritt über die konvex gewölbte Fläche 3 in die Meniskuslinse 1 ein und über die konkav gewölbte Fläche 2 wieder aus ihr aus. Die beiden möglichen Lichtwege sind durch entsprechende Pfeile gekennzeichnet. Beide Flächen 2 und 3 weisen solche Krümmungen auf, dass eine kollimierter, parallel zu einer optischen Achse 4 der mindestens einen Meniskuslinse 1 in diese eintretender Lichtstrahl mit einem gegenüber dem eintretenden Lichtstrahl veränderten Durchmesser, wiederum als kollimierter Lichtstrahl aus ihr austritt. Je nach Lichtweg wird der Durchmesser des kollimierten Strahls also entweder verkleinert oder vergrößert. Um sicherzustellen, dass ein eintretender kollimierter Lichtstrahl auch nach dem Austreten weiterhin kollimiert ist und über den gesamten Durchmesser die gleiche Intensität aufweist, weist mindestens eine der beiden Flächen 2, 3 zur Vermeidung von Aberrationen, insbesondere von sphärischer Aberration, Koma und Astigmatismus, eine vorgegebene asphärische Form auf.

Gegenüber der Verwendung von sphärischen Flächen stellt die Verwendung einer asphärischen Fläche eine Korrektur der Aberrationen dar. Grundsätzlich ist auch eine Strahlformung mit zwei sphärischen Flächen möglich, jedoch dann nur in der Näherung für kleine Winkel bzw. für Laserstrahlen mit einem Durchmesser von weniger als 3 mm, was für viele Anwendungen nicht ausreicht. Eine Reihenschaltung verschiedener solcher Elemente mit zwei sphärischen Flächen oder zwei Linsen ist aus diesem Grund nicht möglich, da der Eingangsstrahl bereits für die zweite Stufe einen zu großen Durchmesser hat und sich Aberrationen störend bemerkbar machen. Durch die Ausgestaltung des Strahlformers mit einer Meniskuslinse 1, bei der mindestens eine der beiden Flächen 2 oder 3 auf vorgegebene Weise asphärisch geformt ist, lassen sich auch Strahldurchmesser von mehr als 5 mm mit hoher Genauigkeit einstellen.

Entweder ist die konkav gewölbte Fläche 2 asphärisch geformt, oder die konvex gewölbte Fläche 3 ist asphärisch geformt. In besonderen Fällen, wenn beispielsweise nicht nur Aberrationen vermieden werden sollen, sondern auch die Intensitätsverteilung im Strahl - z.B. von einem gaußförmigen auf ein nahezu homogenes, auch als Super-Gauß- oder als *top-hat-* bezeichnetes Profil - geändert werden soll, kann es vorteilhaft sein, auch beide Flächen 2 und 3 asphärisch auszuformen. Auch alle anderen Profilformen zwischen einer normalen Gaußverteilung und einem top-hat-Profil, d.h. Gaußverteilungen niedrigerer Ordnungen als das top-hat-Profil lassen sich als Intensitätsverteilung vorgeben, falls es erforderlich sein sollte.

Eine jede der asphärisch gewölbten Flächen ist durch eine Asphärenfunktion z(h) als Abstand zu einer lotrecht auf der optischen Achse stehenden Geraden beschreibbar. *h* ist der Abstand zur optischen Achse auf dieser Geraden. Die einzelnen Größen sind in Fig.2 erläutert, wobei hier beispielhaft die konvex gewölbte Fläche 3 asphärisch geformt ist. Die Mittendicke ist mit M bezeichnet, der Durchmesser mit d. Die Asphärenfunktion z(h) wird iterativ bestimmt, wobei ein minimaler lokaler Radius der konkav gewölbten Fläche r, die Mittendicke M der jeweiligen Meniskuslinse 1 auf der optischen Achse 4, ein Material, aus welchem die jeweilige Meniskuslinse 1 gefertigt ist, und das Aspektverhältnis, d.h. das Verhältnis zwischen Mittendicke M und Durchmesser d der jeweiligen Meniskuslinse 1 als Parameter vorgegeben sind. Im Falle von zwei asphärischen Flächen werden weitere Parameter zur Festlegung benötigt, als weiteres Feld von Parametern wird hier dann noch die Intensitätsverteilung - beispielsweise wie vorangehend beschrieben - des austretenden Lichtstrahls vorgegeben. Mit diesen Vorgaben lässt sich die durch die Asphärenfunktion z(h) beschriebene Fläche eindeutig festlegen. Beispielsweise lässt sich die asphärisch gewölbte Fläche durch die Beziehung

$$z(h) = \frac{h^2}{R\left(1 + \sqrt{1 - (1+K)\dfrac{h^2}{R^2}}\right)} + \sum_{i=2}^{N} A_{2i} h^{2i} \qquad (1)$$

beschreiben, wobei $K$ die konische Konstante ist, $i$ und N natürliche Zahlen sowie $A_{2i}$ die Koeffizienten eines Polynoms in $h$ sind. $R$ ist der Radius einer Kegelschnittfläche in einem Scheitelpunkt, welcher auf der optischen Achse liegt, d.h. der Abstand des Scheitelpunkts dieser Kegelschnittfläche zu deren nächstgelegenen Brennpunkt, wobei Brennpunkt und Scheitelpunkt auf der optischen Achse liegen. Die Gerade entspricht dann der Tangente der Kegelschnittfläche an diesem Scheitelpunkt.

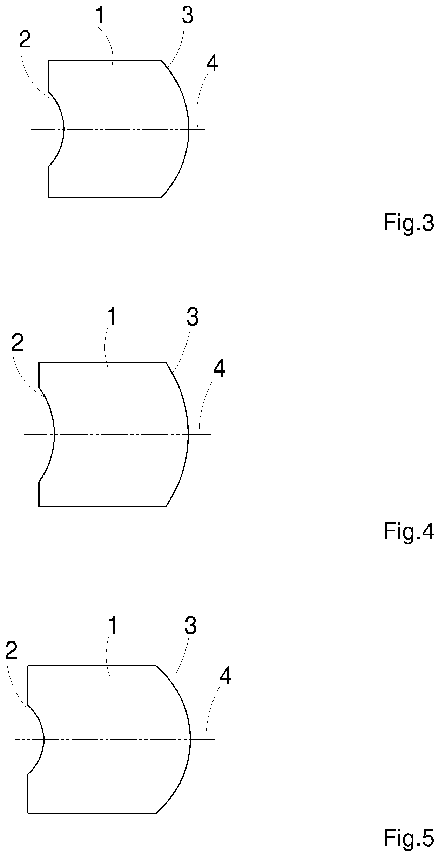

In Fig.3 und Fig.4 sind refraktive Strahlformer dargestellt, die jeweils eine Meniskuslinse 1 umfassen, bei denen nur eine der beiden Flächen 2, 3 asphärisch geformt ist. In Fig.5 ist ein Strahlformer dargestellt, bei dem die Meniskuslinse 1 zwei asphärisch gewölbte Flächen 2, 3 aufweist.

Bei den in Fig.3 und Fig.4 gezeigten Meniskuslinsen 1 beträgt das Aspektverhältnis etwa 0,89, der Durchmesser der Meniskuslinse 1 ist also nur geringfügig größer als die Mittendicke. Im Falle der in Fig.5 gezeigten Meniskuslinse 1 liegt das Aspektverhältnis bei 0,95. Der Durchmesser der Linsen beträgt dabei in allen Fällen nur 25 mm, es handelt sich also um sehr kompakte Strahlformer.

Die in Fig.3 gezeigte Meniskuslinse 1 eines Strahlformers weist eine konkav gewölbte Fläche 2 auf, die sphärisch geformt ist mit einem Radius von 10 mm. Die konvex gewölbte Fläche 3 ist asphärisch geformt.

Die Meniskuslinse 1 des in Fig.4 gezeigten Strahlformers weist hingegen eine konkav geformte Fläche 2 auf, die asphärisch geformt ist, wohingegen die konvex gewölbte Fläche 3 sphärisch mit einem Radius von 22,5 mm geformt ist.

Bei der in Fig.5 gezeigten Ausgestaltung eines Strahlformers weist die Meniskuslinse 1 zwei asphärisch gewölbte Flächen auf, sowohl die konkav gewölbte Fläche 2 als auch die konvex gewölbte Fläche 3 sind asphärisch geformt.

In allen drei Fällen wurde als Material für die Meniskuslinse 1 Borosilikat-Kronglas, auch unter der Abkürzung N-BK7 bekannt, verwendet. Auch Schwerflintglas (S-TIH6) kann wie Borosilikat-Kronglas im sichtbaren Bereich eingesetzt werden, beide Gläser sind kostengünstig. Selbstverständlich kommen auch alle anderen Gläser und auch Kunststoffe grundsätzlich in Frage. Auch normales Flintglas oder beispielsweise Zerodur® können verwendet werden. Quarzglas bietet sich an, wenn die Strahlformung bei Wellenlängen im UV-Bereich und / oder für hohe Laserleistungen vorgenommen werden soll. Für den infraroten Bereich kommen als Material für die Meniskuslinse 1 auch Silizium oder Germanium in Frage, um nur einige Beispiele zu nennen.

Bei den in den Fig. 3-5 gezeigten Meniskuslinsen 1 liegt das Aspektverhältnis in etwa bei 1, es kann jedoch in einem größeren Bereich, der vorzugsweise zwischen 0,5 und 2 liegt, gewählt werden. Der lokale Radius r der konkav gewölbten Fläche 2 kann beispielsweise aus einem Bereich zwischen 10 mm und etwa dem 2-fachen des Durchmessers - in Bezug auf die in den Fig. 3-5 gezeigten Beispiele also etwa 50 mm - der Meniskuslinse 1 gewählt werden, um eine gute Abbildungsqualität zu erzielen. Der Radius einer sphärischen, konvex gewölbten Fläche 3 ergibt sich dann aus der Bedingung, dass die konvex gewölbte Fläche 3 und die konkav gewölbte Fläche 2 konzentrisch zueinander angeordnet sind, bzw. dass die entsprechenden Radien vom gleichen Ursprung ausgehen. Im Falle einer asphärisch geformten Fläche wird diejenige sphärische Fläche konzentrisch angeordnet, die der asphärisch geformten Fläche am nächsten kommt.

Mit der vorangehend beschriebenen einfachen Ausgestaltung des refraktiven Strahlformers als einzelne Meniskuslinse 1 lässt sich der Durchmesser eines kollimierten Lichtstrahls für viele Anwendungen schon ausreichend verkleinern bzw. vergrößern. Dabei kommt man im Gegensatz zum Stand der Technik mit einer einzigen Linse aus, aufgrund der asphärischen Form mindestens einer der beiden optisch wirksamen Flächen, d.h. der konkav gewölbten Fläche 2 und / oder der konvex gewölbten Fläche 3, lässt sich dabei eine hohe Strahlqualität erzielen, wobei eine aufwendige Justage mehrerer Elemente zueinander, wie sie im Stand der Technik erforderlich ist, bei der Herstellung des Strahlformers entfällt. Zudem kommt der refraktive Strahlformer, wie er vorangehend bisher beschrieben wurde, mit einer geringeren Anzahl von optisch wirksamen Flächen aus, da nur ein einziges Element verwendet wird, während bei dem im Stand der Technik bekannten Strahlaufweitern mindestens zwei räumlich voneinander getrennte optische Elemente verwendet werden, so dass mindestens vier optisch wirksame Flächen zu berücksichtigen sind.

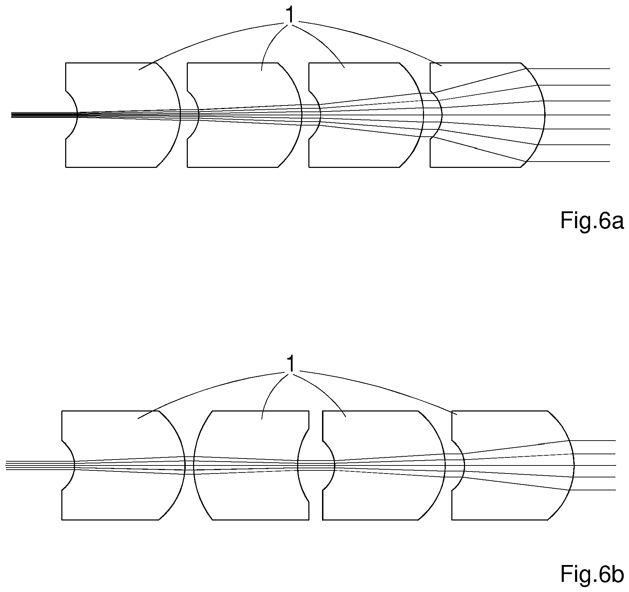

Mit einer einzigen Meniskuslinse 1 lässt sich nur eine einzige Vergrößerung realisieren, die im sichtbaren Bereich in der Regel nicht größer als 2,5 und im Infraroten nicht höher als 3,5 ist, sofern eine kompakte Bauweise, die sich leicht in vorhandene Strahlenlänge einfügen lässt, angestrebt wird, beispielsweise mit den Abmessungen, wie sie in Zusammenhang mit den Fig. 3-5 beschrieben wurden. Gerade die kompakte Bauweise macht es jedoch auch möglich, mehrere Meniskuslinsen 1 entlang ihrer optischen Achse 4 hintereinander anzuordnen, wodurch sich eine gegenüber einer einzelnen Meniskuslinse 1 größere Veränderung des Durchmessers des Lichtstrahls ergibt. Ein solches Beispiel ist in Fig.6a gezeigt. Ein von links kommender Laserstrahl mit einem geringen Durchmesser von 1,4 mm wird beim Durchtritt durch den refraktiven Strahlformer, der als Kaskade von Meniskuslinsen 1 ausgebildet ist, aufgeweitet, bis der Durchmesser des Laserstrahls fast den Wert des Durchmessers einer Meniskuslinse 1 erreicht. Bei der in Fig. 6a gezeigten Anordnung umfasst der Strahlformer vier Meniskuslinsen 1, das System zur Strahlformung kann jedoch auch weniger oder mehr Meniskuslinsen umfassen, je nachdem wie groß der Durchmesser des Lichtstrahls am Ende nach Austritt aus dem refraktiven Strahlformer sein soll. Im gezeigten Beispiel erfolgt eine Vergrößerung um den Faktor 16. Soll der Lichtstrahl bei dem in Fig. 6a gezeigten Beispiel nach Durchtritt durch die vierte, am weitesten rechts angeordnete Meniskuslinse 1 noch weiter aufgeweitet werden, so können entsprechend auch Meniskuslinsen mit größeren Durchmessern verwendet werden.

Dabei besteht auch die Möglichkeit, Zwischenvergrößerungen einzustellen, eine oder mehrere Meniskuslinsen 1 im Strahlformer strahlverkleinernd anzuordnen, d.h. die optische Achse der Meniskuslinse 1 um 180° gegen die optische Achse des Gesamtsystems zu drehen, so dass die konvex gewölbte Fläche in Richtung des eintretenden Strahls weist. Eine solcher Strahlformer bzw. ein strahlformendes System aus mehreren Meniskuslinsen ist in Fig. 6b dargestellt. Hier erfolgt eine Vergrößerung des Ausgangsstrahls - mit einem Eingangsdurchmesser von 2,1 mm - um den Faktor 5 1/3. Die Strahlführung kann schließlich auch umgekehrt werden, so dass der Durchmesser des Lichtstrahls insgesamt verkleinert wird.

Die Anordnung der Meniskuslinsen 1 in einem Strahlformer kann beispielsweise auf einer optischen Bank erfolgen, was jedoch eine genaue Justierung der Meniskuslinsen 1 zueinander erfordert, in dem Sinne, dass die optischen Achsen aller Meniskuslinsen 1 aufeinanderliegen müssen, die Meniskuslinsen 1 also zueinander und auch hinsichtlich des Strahleintritts im Rahmen vorgegebener Toleranzen zentriert sind. Dies beinhaltet auch, dass die optischen Achsen der Linsen nur minimal, d.h. innerhalb zulässiger Toleranzen zueinander verkippt sind. Größere Abweichungen würden ansonsten zu einer erheblichen Verminderung der Strahlqualität führen. Dementsprechend ist eine sehr genaue Justierung notwendig, was mit erheblichem Zeitaufwand verbunden ist und ein einfaches Ändern der Vergrößerung erschwert.

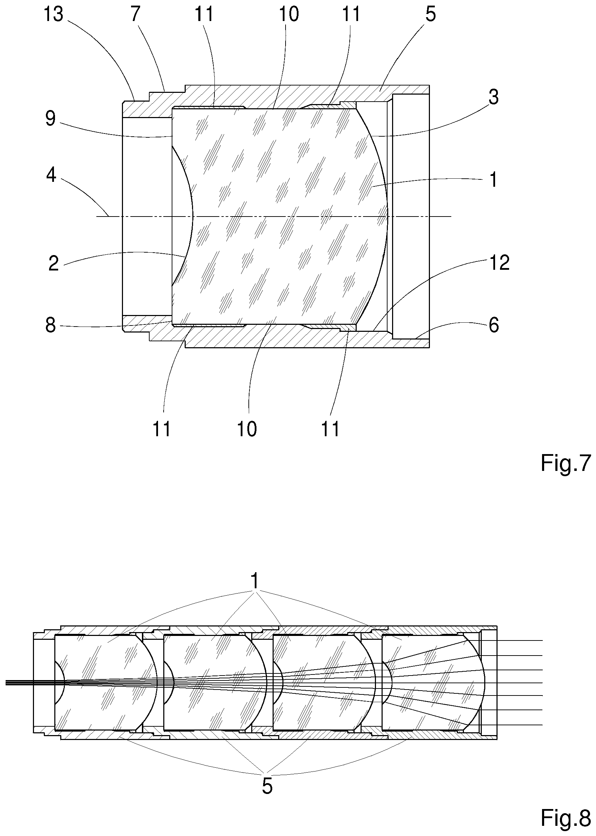

Um dies zu vermeiden, kann die mindestens eine Meniskuslinse 1 in ein tubusförmiges Fassungselement 5 eingesetzt werden, wie es mit eingesetzter Linse beispielhaft in Fig.7 dargestellt ist. Das Fassungselement 5 kann beispielsweise aus einem eloxierten, metallischen Material bestehen, beispielsweise aus Messing, für den Einsatz in Laborumgebung bei gleichbleibenden Temperaturen sind insbesondere Materialien wie Aluminiumlegierungen oder eine Titanlegierung wie $Ti_6Al_4V$ einsetzbar, da sich deren Wärmeausdehnungskoeffizienten ähnlich denen der Gläser verhalten. Die Fassungselemente 5 können auch aus Kunststoff gefertigt sein. Für den Einsatz in Bereichen, die hohen Temperaturschwankungen ausgesetzt sind, eignen sich auch Zerodur® und Macor®, aus ersterem Material können auch die Linsen gefertigt sein. Auch für Meniskuslinsen 1 für den infraroten Bereich aus Germanium oder Silizium sind diese Materialien gut verwendbar, da die Ausdehnungskoeffizienten von Silizium und Germanium unter denen von üblichen Gläsern liegen. Sind die refraktiven Strahlformer hohen Temperaturschwankungen unterworfen, so sollten das Material für die Linsen und das Material für die Fassungselemente so gewählt werden, dass mechanische Spannungen aufgrund der thermischen Ausdehnung der beiden Komponenten, die zu einer Verschlechterung der Abbildungsqualität führen könnten, vermieden werden.

Das in Fig.7 im Querschnitt gezeigte Fassungselement 5 ist tubusförmig und weist demzufolge zwei Öffnungen auf, wobei an den beiden Öffnungen des Fassungselements 5 Mittel zur Verbindung mit jeweils einem entsprechenden weiteren Fassungselement mit mindestens einer weiteren Meniskuslinse 1 ausgebildet sind. Beispielsweise kann eine der beiden Öffnungen des Fassungselements 5 steckerförmig und die andere der beiden Öffnungen buchsenförmig ausgebildet sein, so dass das Fassungselement an jeder Öffnung über eine Steckverbindung mit einem entsprechenden weiteren Fassungselement 5 verbunden werden kann. Im vorliegenden Beispiel ist an der einen Öffnung des Fassungselements 5 ein Innengewinde 6 und an der anderen Öffnung des Fassungselements 5 ein Außengewinde 7 ausgebildet. Auf diese Weise ist das Fassungselement 5 an jeder Öffnung über eine Schraubverbindung mit einem entsprechenden weiteren Fassungselement 5 formschlüssig verbindbar, mehrere Fassungselemente 5 können dann zu einer Gesamtfassung verbunden werden.

Um ein justierungsfreies Hintereinanderreihen verschiedener Meniskuslinsen 1 zu einer Kaskade zu ermöglichen, müssen die einzelnen Meniskuslinsen 1 zuvor in den jeweiligen Fassungselementen 5 justiert und fixiert werden. Um ein Durchrutschen der mindestens einen Meniskuslinse 1 beim Einsetzen und ein Verkippen der eingesetzten Meniskuslinse zu verhindert, weist das Fassungselement 5 zunächst mindestens einen ringförmigen Anschlag 8, der mit hoher Präzision gefertigt ist, auf. Die Meniskuslinse 1 kann dann beispielsweise von oben in das Fassungselement bzw. die Fassung 5 eingesetzt werden, so dass ein planer Randbereich 9 der Meniskuslinse 1, aus dem die konkav gewölbte Fläche 2 ausgeformt ist, auf dem Anschlag 8 aufliegt. Ein Verkippen wird auf diese Weise verhindert. In ein Fassungselement 5 können auch mehrere Meniskuslinsen 1 eingesetzt werden, wenn diese verschiedene Durchmesser haben und die Anschläge entsprechend ebenfalls verschiedene Durchmesser haben.

Um für eine Zentrierung der mindestens einen Meniskuslinse 1 in dem Fassungselement 5 zu sorgen, ist mindestens ein Teilbereich am inneren Umfang des Fassungselements 5 als passgenaue Führung 10 ausgestaltet. Dieser Teilbereich kann umlaufend sein, es können aber beispielsweise auch drei Teilbereiche in Form einer Dreipunktauflage bzw. Dreipunktführung am inneren Umfang des Fassungselements 5 ausgebildet sein. Die einstückige Fertigung wie in Fig.7 dargestellt ist nicht zwingend notwendig. Beispielsweise kann auch ein entsprechender einschraubbarer Ring als Führung vorgesehen sein. Zur Fixierung der Meniskuslinse 1 im Fassungselement 5 wird jene mit dem Fassungselement 5 mit Hilfe eines Adhäsionsmittels verkittet, beispielsweise mit einem unter UV-Licht aushärtenden Adhäsionsmittel 11. Auch anders aushärtende Adhäsionsmittel sind einsetzbar, ebenso kann die Meniskuslinse 1 mit dem Fassungselement 5 auch verlötet oder, anstatt stoffschlüssig, auch nur formschlüssig mit ihm verbunden sein.

Selbstverständlich kann auch eine Zentrierung vorgenommen werden, ohne eine Führung 10 zu verwenden. Das Fassungselement 5 wird dabei dann beispielsweise senkrecht positioniert, so dass die Meniskuslinse 1, bevorzugt mit einer planen Teilfläche auf der Seite der konkav gewölbten Fläche 2, bereits plan und im Rahmen der Toleranzen somit verkippungsfrei auf dem Anschlag 8 aufliegt. Auf diesem kann sie dann horizontal verschoben werden, bis eine im Rahmen der Toleranzen zentrierte Position erreicht ist. Anschließend wird sie in dieser Position mittels des Adhäsionsmittels 11 fixiert. Dabei kann das Adhäsionsmittel 11 auch schon vorab auf die entsprechenden Bereiche aufgetragen werden, so dass ein Verrutschen der Meniskuslinse 1 aus einer gewählten Position erschwert wird. Ist die gewünschte Endposition der Meniskuslinse durch Verschieben auf der ebenen Fläche des Anschlags 8 eingestellt, so wird das Adhäsionsmittel ausgehärtet.

Ist die Meniskuslinse 1 in dem Fassungselement 5 hinsichtlich Verkippung und Zentrierung justiert und in dieser Position fixiert, so lassen sich mittels der Schraubverbindung mehrere Fassungselemente 5 verbinden, ohne dass eine gesonderte Justierung der einzelnen Meniskuslinsen 1 zueinander notwendig wäre. Eine Kombination solcher Fassungselemente 5 ist in Fig.8 beispielhaft im Querschnitt dargestellt. Für die justierfreie Verbindung sorgen Anlageflächen 12 und 13, die in Fig.7 gezeigt und im Bereich der Öffnungen ausgebildet sind. Die Anlagefläche 12 bei der buchsenartigen Öffnung mit dem Innengewinde 6 ist als innen umlaufende, ringförmige Fläche ausgestaltet. Bei der steckerartigen Öffnung mit dem Außengewinde 7 ist auch die Anlagefläche 13 als außen umlaufende, ringförmige Fläche ausgestaltet; beide Anlageflächen 12 und 13 sind vorzugsweise geschliffen, wenn das Fassungselement 5 metallisch ist. Bei den beiden hier gezeigten Anlageflächen 12 und 13 stehen die Flächennormalen stets senkrecht zur optischen Achse, liegen die Flächen also parallel zu dieser Achse. Diese Ausgestaltung ist nicht zwingend, so ist z.B. auch eine konische Formgebung mit Innen- und Außenkegel möglich. Auch müssen die Anlageflächen 12 und 13 nicht vollständig umlaufend ausgebildet sein, eine Gestaltung in Form mehrerer, auf dem Umfang zueinander beabstandeter Bereiche mit Anlageflächen ist ebenfalls möglich.

Für eine besonders große Veränderung des Strahldurchmessers, insbesondere für eine große Vergrößerung des Durchmessers kann es erforderlich sein, Meniskuslinsen 1 mit verschiedenen Durchmessern und davon abhängend auch Fassungselemente 5 mit verschiedenen Durchmessern zu verwenden. Fassungselemente 5 mit verschiedenen Durchmessern lassen sich dann beispielsweise mit Hilfe von entsprechenden Adapterringen miteinander verbinden.

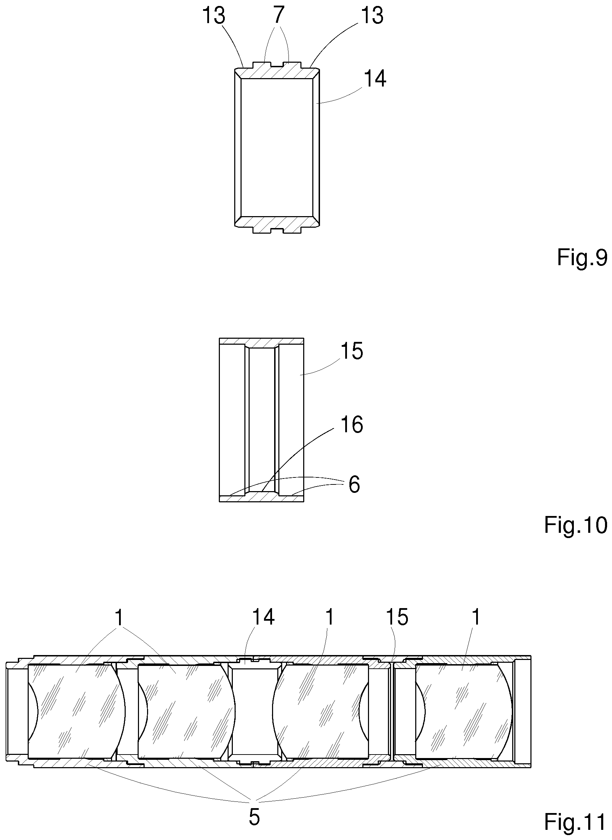

Darüber hinaus kann der Strahlformer auch mindestens einen Zwischenring umfassen, der dazu dient, zwei Fassungen 5 an zwei gleichartig ausgebildeten Öffnungen zu verbinden. Dies kann beispielsweise dann von Vorteil sein, wenn von einer Vergrößerung des Strahls wieder auf eine Verkleinerung umgestellt werden soll. Auf diese Weise lassen sich beispielsweise verschiedene Zwischenvergrößerungen bei der Strahlaufweitung realisieren. Ein erster solcher Zwischenring 14 ist beispielsweise in Fig.9 dargestellt, er weist zwei Außengewinde 7 auf, die mit den entsprechenden Innengewinden 6 des Fassungselements 5 verschraubt werden können, sowie zwei Anlageflächen 13. Ein anderes Beispiel ist in Fig.10 gezeigt, der dort dargestellte Zwischenring 15 weist zwei Innengewinde 6 und eine Anlagefläche 16 auf, deren Abmessungen entlang der optischen Achse zwei Anlageflächen 12 eines Fassungselements bzw. der Fassung 5 entsprechen. Auf diese Weise lassen sich je zwei Fassungselemente 5 an ihren Außengewinden miteinander verbinden, mehrere miteinander verbundene Fassungselemente 5 bilden dann eine Gesamtfassung für den Strahlformer. Ein Strahlformer, bei dem solche Zwischenringe eingesetzt werden, ist beispielsweise in Fig.11 gezeigt.

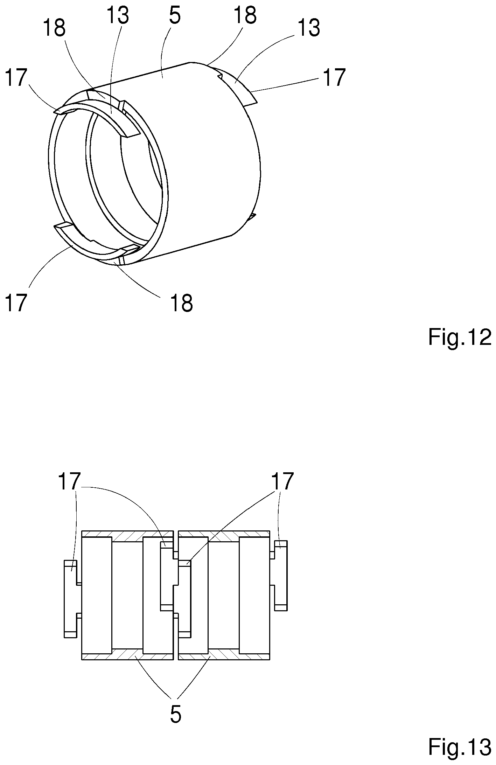

Eine weitere Ausgestaltung eines Fassungselements 5 ist in Fig. 12 dargestellt. Bei dieser Ausführung sind beide Öffnungen gleichartig ausgebildet, sie lassen sich aufgrund der besonderen Ausgestaltung der Verbindungsmittel an den Öffnungen ohne Zwischenringe miteinander verbinden, was das Zusammenstellen verschiedener Vergrößerungen durch die einfachere Handhabung erheblich erleichtert, da beim Wechsel von einer Vergrößerung zu einer Verkleinerung das jeweilige Fassungselement 5 zwar weiterhin um 180° gegen die optische Achse gedreht werden muss, jedoch keine Hilfsmittel zum Zusammensetzen notwendig sind.

An den Öffnungen des in Fig. 12 gezeigten Fassungselements 5 sind Vorsprünge 17 ausgebildet. Dargestellt sind jeweils zwei Vorsprünge 17 pro Öffnung, es können aber auch bei entsprechender Dimensionierung drei oder mehr Vorsprünge 17 vorgesehen sein. Jeder Vorsprung 17 ist hier als Teil eines ringförmigen Kreisbogensegments ausgebildet, seinen äußeren Umfang bildet eine Anlagefläche 13, die im Falle eines metallischen Fassungselements 5 und einstückiger Fertigung vorzugsweise geschliffen ist und zu einer justierfreien Verbindung zweier Fassungselemente 5 beiträgt. Der Vorsprung 17 kann jedoch auch gesondert gefertigt werden und anschließend mit dem Fassungselement 5 verbunden werden. In der in Fig. 12 gezeigten Darstellung ist jeder Vorsprung 17 an einem Höcker 18 ausgebildet oder angeordnet, was das Zusammensetzen erleichtert, da zwei Fassungselemente 5 dann beim Eindrehen nur im Bereich der Höcker 18 miteinander in Kontakt stehen, so dass nur die entsprechenden Flächen an den Höckern 18 mit hoher Präzision gefertigt werden müssen und nicht der ganze Bereich der Öffnung. Gleichzeitig dienen sie als Anschlag für die Begrenzung der Drehbewegung. Die Ausbildung von Höckern 18 ist nicht zwingend erforderlich, erleichtert jedoch die Fertigung.

Beim Verbinden zweier Fassungselemente 5 werden diese zunächst so zueinander ausgerichtet, dass sich die Vorsprünge 17 der einander gegenüberliegenden Öffnungen zweier Fassungselemente 5 beim Einsetzen nicht gegenseitig behindern; bei der in Fig. 12 gezeigten Ausführung würde man daher ein zweites Fassungselement 5 um 90° auf der optischen Achse drehen. Beim Zusammenstecken der beiden Fassungselemente 5 liegen dann die Anlageflächen 13 des einen Fassungselements 5 am inneren Umfang oder an einer Anschlagfläche 12 des anderen Fassungselements 5, und umgekehrt. Mittels einer Drehbewegung werden dann die Vorsprünge 17 der beiden Fassungselemente 5 miteinander verschränkt, so dass ein Auseinanderziehen der beiden Fassungselemente 5 verhindert werden kann, sie stehen an ihren der Öffnung des zugehörigen Fassungselements 5 zugewandten Unterseiten jeweils mit einem Höcker 18 des anderen Fassungselements 5 in Kontakt. Die Drehbewegung wird dabei durch die Höcker 18 begrenzt um sicherzustellen, dass eine stabile Verbindung hergestellt wird. Zwei miteinander verbundene Fassungselemente 5 sind in Fig. 13 dargestellt.

Die Verbindung über hintereinandergreifende Vorsprünge kann auch durch eine Rastverbindung ergänzt werden, beispielsweise indem auf den Anlageflächen 13 der Vorsprünge 17 Nasen ausgebildet werden, die im verbundenen Zustand in entsprechende Vertiefungen am inneren Umfang bzw. den Anschlagflächen 12 eingreifen.

Die Vorsprünge 17 können auch als Federelement ausgestattet sein, so dass beim Einsetzen zusätzlich zu der formschlüssigen Verbindung über zwei Vorsprünge 17 auch eine kraftschlüssige Verbindung zweier Fassungselemente 5 hergestellt wird. Bei entsprechend starker Federwirkung kann auf die formschlüssige Verschränkung auch verzichtet werden, ein einfaches Zusammenstecken ohne Drehbewegung ist dann ausreichend - in diesem Fall wird eine spezielle Stecker-Buchse-Verbindung realisiert, bei welcher Stecker und Buchse identisch geformt sind.

Schließlich können die Fassungselemente 5 auch weitere optische Elemente aufnehmen, welche die Flexibilität des Strahlformers erhöhen. So kann beispielsweise ein - nicht gezeigtes - wellenlängenadaptives Korrekturelement bereit gestellt werden, welches bevorzugt ebenfalls in einem eigenen Fassungselement 5 angeordnet ist, und welches einen Betrieb des Strahlformers auch bei Wellenlängen ermöglicht, die von einer Soll-Wellenlänge, für welche der Strahlformer ausgelegt ist, abweichen. Auch kann ein - ebenfalls nicht gezeigtes - Zoomelement bereitgestellt werden, welches bevorzugt ebenfalls in einem eigenen Fassungselement 5 angeordnet ist, und mit welchem stufenlos Zwischenvergrößerungen eingestellt werden können.

Bei dem vorangehend beschriebenen refraktiven Strahlformer handelt es sich um ein kompaktes optisches System, welches dem Anwender beispielsweise für die Strahlaufweitung von Laserstrahlen eine Vielzahl von Vergrößerungen zur Verfügung stellt, wobei zum Wechsel der Vergrößerung keine erneute Justierung des optischen Systems notwendig ist.

**Bezugszeichenliste**

| | |
|---|---|
| 1 | Meniskuslinse |
| 2 | konkav gewölbte Fläche |
| 3 | konvex gewölbte Fläche |
| 4 | optische Achse |
| 5 | Fassungselement |
| 6 | Innengewinde |
| 7 | Außengewinde |
| 8 | Anschlag |
| 9 | Randbereich |
| 10 | Führung |
| 11 | Adhäsionsmittel |
| 12, 13 | Anlagefläche |
| 14, 15 | Zwischenring |
| 16 | Anlagefläche |
| 17 | Vorsprung |
| 18 | Höcker |
| | |
| M | Mittendicke |
| d | Durchmesser |

**Patentansprüche**

**1.** Refraktiver Strahlformer, umfassend mehrere, entlang ihrer optischen Achsen (4) hintereinander angeordnete Meniskuslinsen (1), wobei eine jede Meniskuslinse (1)

- eine konkav gewölbte Fläche (2) zum Eintritt bzw. Austritt eines Lichtstrahls, und
- eine konvex gewölbte Fläche (3) zum Austritt bzw. Eintritt des Lichtstrahls aufweist,
- wobei beide Flächen derartige Krümmungen aufweisen, dass ein kollimierter, parallel zu der optischen Achse (4) der jeweiligen Meniskuslinse (1) in diese eintretender Lichtstrahl mit einem gegenüber dem eintretenden Lichtstrahl veränderten Durchmesser als kollimierter Lichtstrahl austritt, und
- wobei mindestens eine der beiden Flächen (2, 3) einer jeden Meniskuslinse (1) zur Vermeidung von Aberrationen eine vorgegebene asphärische Form aufweist,
- wobei der Strahlformer als Kaskade von Meniskuslinsen (1) ausgebildet ist, welche verschieden kombinierbar sind.

**2.** Refraktiver Strahlformer nach Anspruch 1, **dadurch gekennzeichnet, dass**

- eine jede asphärisch gewölbte Fläche (2) und/oder (3) durch eine Asphärenfunktion z(h) als Abstand zu einer lotrecht auf der optischen Achse stehenden Geraden beschreibbar ist, mit h dem Abstand zur optischen Achse (4) auf der Geraden,
- wobei ein minimaler lokaler Radius der konkav gewölbten Fläche r, die Mittendicke der jeweiligen Meniskuslinse (1) auf der optischen Achse (4), ein Material, aus welchem die jeweilige Meniskuslinse (1) gefertigt ist, das Aspektverhältnis zwischen Mittendicke und Durchmesser der jeweiligen Meniskuslinse (1), und falls beide Flächen (2, 3) asphärisch gewölbt sind, eine Intensitätsverteilung für den austretenden Lichtstrahl als Parameter vorgegeben sind.

**3.** Refraktiver Strahlformer nach Anspruch 2, **dadurch gekennzeichnet, dass** die Intensitätsverteilung für den austretenden Lichtstrahl im Querschnitt ein einer Gaußverteilung folgendes oder ein nahezu homogenes Profil aufweist.

**4.** Refraktiver Strahlformer nach einem der Ansprüche 2 oder 3, **dadurch gekennzeichnet, dass** das Aspektverhältnis zwischen 0,5 und 2, vorzugsweise bei 1 liegt, und/oder der Radius r in einem Bereich zwischen 10 mm und etwa dem Zweifachen des Durchmessers der jeweiligen Meniskuslinse (1) liegt.

**5.** Refraktiver Strahlformer nach einem der Ansprüche 1 bis 4, **dadurch gekennzeichnet, dass** ein Teil der mehreren Meniskuslinsen (1) den Durchmesser des Strahls vergrößernd und der übrige Teil den Durchmesser des Strahls verkleinernd angeordnet ist.

**6.** Refraktiver Strahlformer nach einem der Ansprüche 1 bis 5, **dadurch gekennzeichnet, dass** eine jede Meniskuslinse (1) in ein tubusförmiges Fassungselement (5), vorzugsweise aus einem eloxierten, metallischem Material, mit zwei Öffnungen eingesetzt ist, wobei an den beiden Öffnungen des Fassungselements (5) Mittel zur Verbindung mit jeweils einem entsprechenden weiteren Fassungselement (5) mit mindestens einer weiteren Meniskuslinse (1) ausgebildet sind.

**7.** Refraktiver Strahlformer nach Anspruch 6, **dadurch gekennzeichnet, dass** in dem Fassungselement (5) mindestens ein, bevorzugt ringförmiger, Anschlag (8) ausgebildet ist, der ein Durchrutschen der mindestens einen Meniskuslinse (1) beim Einsetzen in das Fassungselement (5) und ein Verkippen der eingesetzten Meniskuslinse (1) verhindert.

**8.** Refraktiver Strahlformer nach einem der Ansprüche 6 oder 7, **dadurch gekennzeichnet, dass** mindestens ein Teilbereich am inneren Umfang des Fassungselements (5) als passgenaue Führung (10) für die Meniskuslinse (1) und deren Zentrierung in dem Fassungselement (5) ausgestaltet ist.

**9.** Refraktiver Strahlformer nach einem der Ansprüche 6 bis 8, **dadurch gekennzeichnet, dass** an dem Fassungselement (5) Anlageflächen (12, 13) zur justierfreien Verbindung mit einem weiteren Fassungselement (5) ausgebildet sind.

**10.** Strahlformer nach einem der Ansprüche 6 bis 9 **dadurch gekennzeichnet, dass** an der einen Öffnung des Fassungselements (5) ein Innengewinde (6) und an der anderen Öffnung ein Außengewinde (7) ausgebildet ist, so dass das Fassungselement (5) an jeder Öffnung über eine Schraubverbindung mit einem entsprechenden weiteren Fassungselement (5) verbindbar ist.

11. Refraktiver Strahlformer nach Anspruch 10, umfassend mindestens einen Zwischenring (14, 15) zur Verbindung zweier Fassungselemente (5) an zwei gleichartig ausgebildeten Öffnungen.

12. Refraktiver Strahlformer nach einem der Ansprüche 6 bis 9, **dadurch gekennzeichnet, dass** an beiden Öffnungen des Fassungselements (5) entweder ein Innengewinde (6) oder ein Außengewinde (7) ausgebildet ist, und zwei Fassungen über einen entsprechenden Zwischenring (14, 15) verbindbar sind.

13. Refraktiver Strahlformer nach einem der Ansprüche 6 bis 9, **dadurch gekennzeichnet, dass** an beiden Öffnungen des Fassungselements (5) gleichartige Verbindungsmittel ausgebildet sind, welche Vorsprünge zum Eingreifen und Eindrehen in ein weiteres Fassungselement (5) umfassen, so dass die Vorsprünge zweier Fassungselemente (5) im verbundenen Zustand hintereinandergreifend angeordnet sind.

14. Refraktiver Strahlformer nach einem der Ansprüche 1 bis 13, umfassend mindestens ein wellenlängenadaptives Korrekturelement, welches bevorzugt in einem eigenen Fassungselement (5) angeordnet ist, zur Korrektur von Aberrationen bei Ist-Wellenlängen, die in einem vorgegebenen Bereich um eine Soll-Wellenlänge liegen, wobei der Strahlformer für einen Betrieb bei der Soll-Wellenlänge ausgelegt ist, und das wellenlängenadaptive Korrekturelement einen divergenten oder konvergenten Lichtstrahl bei der Ist-Wellenlänge in einen kollimierten Lichtstrahl überführend ausgebildet ist.

15. Refraktiver Strahlformer nach Anspruch 14, **dadurch gekennzeichnet, dass** das wellenlängenselektive Korrekturelement eine erste äußere, eine mittlere und eine zweite äußere Korrekturlinse umfasst, von denen mindestens eine Korrekturlinse mindestens eine asphärische Oberfläche aufweist.

16. Refraktiver Strahlformer nach Anspruch 15, **dadurch gekennzeichnet, dass** eine der beiden äußeren Korrekturlinsen eine asphärische Oberfläche aufweist und die andere der beiden äußeren Korrekturlinsen gegen die übrigen beiden entlang der optischen Achse verschiebbar ist.

17. Refraktiver Strahlformer nach einem der Ansprüche 1 bis 16, umfassend ein Zoomelement zur Einstellung einer stufenlosen Zwischenvergrößerung, welches bevorzugt in einem eigenen Fassungselement (5) angeordnet ist.

18. Refraktiver Strahlformer nach Anspruch 17, **dadurch gekennzeichnet, dass** das Zoomelement eine erste äußere, eine mittlere und eine zweite äußere Zoomlinsengruppe umfasst, wobei eine der äußeren und die mittlere Zoomlinsengruppe gegenüber der anderen äußeren Zoomlinsengruppe entlang der optischen Achse verschiebbar ist, und wobei bevorzugt die nicht verschiebbare Zoomlinsengruppe eine asphärische Oberfläche aufweist.

**Claims**

1. Refractive beamformer, comprising several meniscus lenses (1) arranged one behind the other along their optical axes (4), wherein each and every meniscus lens (1) has

   - a concavely curved surface (2) for the entry or, respectively, exit of a light beam, and
   - a convexly curved surface (3) for the exit or, respectively, entry of the light beam,
   - wherein both surfaces have curvatures such that a collimated light beam entering the respective meniscus lens (1) parallel to the optical axis (4) of the latter exits as a collimated light beam with a diameter that has been altered compared with the entering light beam, and
   - wherein at least one of the two surfaces (2, 3) of each and every meniscus lens (1) has a predefined aspherical shape for the prevention of aberrations,
   - wherein the beamformer is formed as a cascade of meniscus lenses (1), which can be combined in different ways.

2. Refractive beamformer according to claim 1, **characterized in that**

   - each and every aspherically curved surface (2) and/or (3) can be described by an aspherical function z(h) as the distance to a straight line perpendicular to the optical axis, where *h* is the distance to the optical axis (4) on the straight line,

- wherein a minimum local radius of the concavely curved surface r, the centre thickness of the respective meniscus lens (1) on the optical axis (4), a material from which the respective meniscus lens (1) is manufactured, the aspect ratio between centre thickness and diameter of the respective meniscus lens (1) and, if both surfaces (2, 3) are aspherically curved, an intensity distribution for the exiting light beam are predefined as parameters.

3. Refractive beamformer according to claim 2, **characterized in that** the intensity distribution for the exiting light beam has, in cross section, a profile following a Gaussian distribution or an almost homogeneous profile.

4. Refractive beamformer according to one of claims 2 or 3, **characterized in that** the aspect ratio lies between 0.5 and 2, is preferably 1, and/or the radius *r* lies in a range between 10 mm and approximately twice the diameter of the respective meniscus lens (1).

5. Refractive beamformer according to one of claims 1 to 4, **characterized in that** some of the several meniscus lenses (1) are arranged to enlarge the diameter of the beam and the rest are arranged to reduce the diameter of the beam.

6. Refractive beamformer according to one of claims 1 to 5, **characterized in that** each and every meniscus lens (1) is inserted into a tubular holding element (5), preferably made from an anodized metallic material, with two openings, wherein means for connection to in each case one corresponding further holding element (5) with at least one further meniscus lens (1) are formed at both openings of the holding element (5).

7. Refractive beamformer according to claim 6, **characterized in that** at least one, preferably annular, stop (8) is formed in the holding element (5), which stop prevents the at least one meniscus lens (1) from slipping through during insertion into the holding element (5) and prevents the inserted meniscus lens (1) from tilting.

8. Refractive beamformer according to one of claims 6 or 7, **characterized in that** at least one partial area on the inner perimeter of the holding element (5) is designed as a precisely fitting guide (10) for the meniscus lens (1) and for centring it in the holding element (5).

9. Refractive beamformer according to one of claims 6 to 8, **characterized in that** bearing surfaces (12, 13) are formed on the holding element (5) for adjustment-free connection to a further holding element (5).

10. Beamformer according to one of claims 6 to 9, **characterized in that** an internal thread (6) is formed at one opening of the holding element (5) and an external thread (7) is formed at the other opening, with the result that, at each opening, the holding element (5) can be connected to a corresponding further holding element (5) via a screw connection.

11. Refractive beamformer according to claim 10, comprising at least one intermediate ring (14, 15) for connecting two holding elements (5) at two identically formed openings.

12. Refractive beamformer according to one of claims 6 to 9, **characterized in that** either an internal thread (6) or an external thread (7) is formed at the two openings of the holding element (5) and two holders can be connected via a corresponding intermediate ring (14, 15).

13. Refractive beamformer according to one of claims 6 to 9, **characterized in that**, at the two openings of the holding element (5), identical connecting means are formed which comprise protrusions for engaging and screwing into a further holding element (5), with the result that, in the connected state, the protrusions of two holding elements (5) are arranged engaging one behind the other.

14. Refractive beamformer according to one of claims 1 to 13, comprising at least one wavelength-adaptive correction element, which is preferably arranged in a holding element (5) of its own, for the correction of aberrations in the case of actual wavelengths which lie in a predefined range around a target wavelength, wherein the beamformer is designed for operation at the target wavelength, and the wavelength-adaptive correction element is formed to convert a divergent or convergent light beam at the actual wavelength into a collimated light beam.

15. Refractive beamformer according to claim 14, **characterized in that** the wavelength-selective correction element comprises a first outer, a middle and a second outer correction lens, of which at least one correction lens has at least one aspherical surface.

16. Refractive beamformer according to claim 15, **characterized in that** one of the two outer correction lenses has an aspherical surface and the other of the two outer correction lenses is movable along the optical axis in relation to the other two.

17. Refractive beamformer according to one of claims 1 to 16, comprising a zoom element for adjusting a stepless intermediate magnification, which is preferably arranged in a holding element (5) of its own.

18. Refractive beamformer according to claim 17, **characterized in that** the zoom element comprises a first outer, a middle and a second outer zoom lens group, wherein one of the outer zoom lens groups and the middle zoom lens group are movable along the optical axis relative to the other outer zoom lens group, and wherein the non-movable zoom lens group preferably has an aspherical surface.

**Revendications**

1. Formateur de faisceaux de réfraction comprenant plusieurs ménisques (1) disposés les uns derrière les autres le long de leurs axes optiques (4), chacun sans exception des ménisques (1) ayant

  - une surface à courbure concave (2) pour l'entrée ou, respectivement, la sortie d'un faisceau lumineux et
  - une surface à courbure convexe (3) pour la sortie ou, respectivement, l'entrée du faisceau lumineux,
  - les deux surfaces ayant des courbures telles qu'un faisceau lumineux collimaté qui entre dans le ménisque respectif (1) parallèle à l'axe optique (4) de ce dernier sort sous la forme d'un faisceau lumineux collimaté dont le diamètre a changé par comparaison au faisceau lumineux entrant et
  - au moins une des deux surfaces (2, 3) de chacun sans exception des ménisques (1) ayant une forme asphérique prédéfinie pour empêcher les aberrations,
  - le formateur de faisceau étant constitué d'une cascade de ménisques (1) qui peuvent être combinés de différentes manières.

2. Formateur de faisceaux de réfraction selon la revendication 1, **caractérisé en ce que**

  - chacune sans exception des surfaces à courbure asphérique (2) et/ou (3) peut être décrite par une fonction asphérique $z(h)$ comme une distance par rapport à une ligne droite perpendiculaire à l'axe optique, où $h$ est la distance par rapport à l'axe optique (4) sur la ligne droite,
  - où un rayon local minimum de la surface à courbure concave r, l'épaisseur au centre du ménisque respectif (1) sur l'axe optique (4), un matériau à partir duquel le ménisque respectif (1) est fabriqué, le facteur d'aspect entre l'épaisseur au centre et le diamètre du ménisque respectif (1) et, si les deux surfaces (2, 3) sont à courbure asphérique, une répartition des intensités du faisceau lumineux sortant sont prédéfinis en tant que paramètres.

3. Formateur de faisceaux de réfraction selon la revendication 2, **caractérisé en ce que** la répartition des intensités du faisceau lumineux sortant présente, en coupe transversale, un profil qui suit une distribution gaussienne ou un profil presque homogène.

4. Formateur de faisceaux de réfraction selon l'une des revendications 2 ou 3, **caractérisé en ce que** le facteur d'aspect se situe entre 0,5 et 2 et est de préférence égal à 1, et/ou le rayon rse situe dans une plage entre 10 mm et approximativement le double du diamètre du ménisque respectif (1).

5. Formateur de faisceaux de réfraction selon l'une des revendications 1 à 4, **caractérisé en ce que** certains des plusieurs ménisques (1) sont disposés de manière à agrandir le diamètre du faisceau et les autres sont disposés de manière à réduire le diamètre du faisceau.

6. Formateur de faisceaux de réfraction selon l'une des revendications 1 à 5, **caractérisé en ce que** chacun sans exception des ménisques (1) est inséré dans un élément de maintien tubulaire (5) de préférence composé d'un matériau métallique anodisé et doté de deux ouvertures, où des moyens permettant dans chaque cas un raccordement à un autre élément de maintien correspondant (5) qui contient au moins un autre ménisque (1) sont formés aux deux ouvertures de l'élément de maintien (5).

**7.** Formateur de faisceaux de réfraction selon la revendication 6, **caractérisé en ce que** au moins une butée (8), de préférence annulaire, est formée dans l'élément de maintien (5), laquelle butée empêchant le au moins un ménisque (1) de glisser au travers lors de l'insertion dans l'élément de maintien (5) et empêchant l'inclinaison du ménisque inséré (1).

**8.** Formateur de faisceaux de réfraction selon l'une des revendications 6 ou 7, **caractérisé en ce qu'**au moins une zone partielle sur le périmètre interne de l'élément de maintien (5) est conçue en tant que guide (10) permettant une mise en place précise du ménisque (1) et son centrage dans l'élément de maintien (5).

**9.** Formateur de faisceaux de réfraction selon l'une des revendications 6 à 8, **caractérisé en ce que** des surfaces porteuses (12, 13) sont formées sur l'élément de maintien (5) pour permettre un raccordement sans ajustement à un autre élément de maintien (5).

**10.** Formateur de faisceaux selon l'une des revendications 6 à 9, **caractérisé en ce qu'**un taraudage interne (6) est formé à une ouverture de l'élément de maintien (5) et un taraudage externe (7) est formé à l'autre ouverture, de sorte qu'à chaque ouverture, l'élément de maintien (5) peut être raccordé à un autre élément de maintien correspondant (5) par le biais d'un raccordement vissé.

**11.** Formateur de faisceaux de réfraction selon la revendication 10, comprenant au moins une bague intermédiaire (14, 15) pour raccorder deux éléments de maintien (5) au niveau de deux ouvertures formées d'une manière identique.

**12.** Formateur de faisceaux de réfraction selon l'une des revendications 6 à 9, **caractérisé en ce que** soit un taraudage interne (6), soit un taraudage externe (7) est formé aux deux ouvertures de l'élément de maintien (5) et deux supports peuvent être raccordés par le biais d'une bague intermédiaire correspondante (14, 15).

**13.** Formateur de faisceaux de réfraction selon l'une des revendications 6 à 9, **caractérisé en ce qu'**aux deux ouvertures de l'élément de maintien (5), des moyens de raccordement identiques sont formés qui comprennent des saillies permettant de l'enclencher et de le visser à un autre élément de maintien (5), de sorte qu'à l'état raccordé, les saillies de deux éléments de maintien (5) sont disposées d'une manière telle qu'ils sont enclenchés l'un derrière l'autre.

**14.** Formateur de faisceaux de réfraction selon l'une des revendications 1 à 13, comprenant au moins un élément de correction adaptative de la longueur d'onde qui est de préférence disposé dans son propre élément de maintien (5) distinct et qui est conçu pour corriger les aberrations quand les longueurs d'onde réelles se situent dans une fenêtre prédéfinie de part et d'autre d'une longueur d'onde cible, où le formateur de faisceaux est conçu pour opérer à la longueur d'onde cible et où l'élément de correction adaptative de la longueur d'onde est conçu pour convertir un faisceau lumineux qui est divergent ou convergent à la longueur d'onde réelle en un faisceau lumineux collimaté.

**15.** Formateur de faisceaux de réfraction selon la revendication 14, **caractérisé en ce que** l'élément de correction sélective de la longueur d'onde comprend une première lentille de correction externe, une lentille de correction intermédiaire et une deuxième lentille de correction externe, parmi lesquelles une au moins lentille de correction présente une au moins surface asphérique.

**16.** Formateur de faisceaux de réfraction selon la revendication 15, **caractérisé en ce que** l'une des deux lentilles de correction externes a une surface asphérique et l'autre des deux lentilles de correction externes est déplaçable par rapport aux deux autres le long de l'axe optique.

**17.** Formateur de faisceaux de réfraction selon l'une des revendications 1 à 16, comprenant un zoom qui permet de produire un grossissement optique intermédiaire à variation continue et qui est de préférence disposé dans son propre élément de maintien (5) distinct.

**18.** Formateur de faisceaux de réfraction selon la revendication 17, **caractérisé en ce que** le zoom comprend un premier ensemble de lentilles à focale variable externe, un ensemble de lentilles à focale variable intermédiaire et un deuxième ensemble de lentilles à focale variable externe, un des ensembles de lentilles à focale variable externes et l'ensemble de lentilles à focale variable intermédiaire étant déplaçables le long de l'axe optique par rapport à l'autre ensemble de lentilles à focale variable externe et l'ensemble de lentilles à focale variable non déplaçable ayant de préférence une surface asphérique.

Fig.1

Fig.2

Fig.3

Fig.4

Fig.5

Fig.6a

Fig.6b

Fig.7

Fig.8

Fig.9

Fig.10

Fig.11

Fig.12

Fig.13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0240194 A1

- DE 69106569 T2